# EUROPEAN PATENT SPECIFICATION

(11) **EP 2 255 956 B1**
(45) Date of publication and mention of the grant of the patent: **16.07.2014**
(21) Application number: 10164354.2
(22) Date of filing: 28.05.2010
(51) Int. Cl.: B29C 65/52, D06H 5/00, A41H 43/04, A41D 27/24

(54) **Cloth bonding apparatus**
Vorrichtung zum Verbinden von Stoff
Appareil de liaison de tissus

(30) Priority: 28.05.2009 JP 2009128535
(43) Date of publication of application: 01.12.2010
(73) Proprietor: Brother Kogyo Kabushiki Kaisha, Nagoya-shi, Aichi 467-8561 (JP)
(72) Inventor: Yamaura, Hiroki, Nagoya-shi Aichi 467-8562 (JP); Umeda, Kazutoshi, Nagoya-shi Aichi 467-8562 (JP); Iwakoshi, Hiroyasu, Nagoya-shi Aichi 467-8562 (JP); Enya, Tetsuji, Nagoya-shi Aichi 467-8562 (JP); Nishimura, Kazuto, Nagoya-shi Aichi 467-8562 (JP)
(74) Representative: Prüfer & Partner GbR European Patent Attorneys

(56) References cited:
- WO-A2-2007/037865
- US-A1- 2003 010 439
- US-A1- 2004 074 597

## Description

### BACKGROUND

The present invention relates to a cloth bonding apparatus. More specifically, the present invention relates to a cloth bonding apparatus in which a position of a feeding portion can be changed depending on a work state.

A bonding apparatus is directed for bonding cloths with an adhesive, instead of sewing the cloths with a needle and a thread. By bonding the cloths with the adhesive, the bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing clothes and which are free from discomfort caused by unevenness.

The bonding apparatus heats an adhesive to be liquid and discharges a liquid adhesive from a nozzle. The adhesive discharged from the nozzle adheres onto one of cloths. The worker then places another cloth onto top of the cloth on which the adhesive has been applied. The bonding apparatus presses the cloths in a pressurized manner. The cloths are thus bonded together.

The cloth bonding apparatus needs to discharge the adhesive to an end of the cloth arranged at the most downstream side in a feeding direction of the cloth and to bond the ends of the cloths. For example, with an apparatus described in Japanese Patent Application Laid-Open Publication No. 2002-104318, a roller is provided opposite to an adherend of an adhesive relative to a nozzle. The adhesive adheres to a paper band. The roller feeds the paper band. The apparatus can discharge the adhesive onto an end of the paper band.

### SUMMARY

However, the above described apparatus additionally needs a pullout device that pulls out the paper band, and a pressing device that bonds the adhesive-applied paper band to a paper box. Therefore, when the apparatus is used to bond cloths, it is difficult to discharge the adhesive onto an end of the cloth and to feed and bond the cloth with each other.

US 2003/010439 A1 discloses a generic cloth bonding apparatus according to the preamble of claim 1. The apparatus does not directly apply an adhesive onto a cloth, but a tape provided with an adhesive in advance. The apparatus has first and second feeding portions, wherein the second feeding portion is provided at a downstream side of an adhesive applicator die. The first feeding portion is not fully separated from the cloth, but a circumferential contact distance is adjusted, which determines a residence time of the tape within a nip as it passes therethrough.

WO 2007/037865 A2 and US 2004/074597 A1 disclose other cloth bonding apparatuses.

An object of the present invention is to provide a cloth bonding apparatus that can apply an adhesive to an end of a cloth.

The cloth bonding apparatus according to the present invention includes a nozzle through which an adhesive is dischargeable onto a cloth, a first feeding portion that is provided on a downstream side of the nozzle in a feeding direction of the cloth and positioned on a first side relative to the cloth to be fed, a second feeding portion that is provided opposite to the first feeding portion on a second side, and provided at a nozzle position or at an upstream side of the nozzle position in the feeding direction, the second side being the other side opposite to the first side relative to the cloth, the nozzle position being a position on the second side opposite to the nozzle, a first moving portion that moves the first feeding portion to a position in contact with the cloth and to a position separated from the cloth, and a switch portion that switches a work state of bonding the cloth between a first work state and a second work state, and wherein, in a case where the switch portion switches the work state to the first work state, the first moving portion moves the first feeding portion to the position in contact with the cloth such that the first feeding portion and the second feeding portion feed the cloth, and in a case where the switch portion switches the work state to the second work state, the first moving portion moves the first feeding portion to the position separated from the cloth and the second feeding portion feeds the cloth.

The cloth bonding apparatus discharges an adhesive between two cloths in the first work state. The cloth bonding apparatus moves the first feeding portion such that the first feeding portion abuts the cloth. The first feeding portion and the second feeding portion sandwich and press the cloths. Thus, the cloth bonding apparatus can bond the two layers of cloths. The cloth bonding apparatus discharges the adhesive to the cloth in the second work state. The cloth bonding apparatus moves the first feeding portion such that the first feeding portion moves away from the cloth. The second feeding portion feeds the cloth. Thus, the cloth bonding apparatus can prevent the adhesive applied on the cloth from adhering to the first feeding portion.

In the cloth bonding apparatus, the first feeding portion may comprise a first roller, and in a case where the switch portion switches the work state to the first work state, the first moving portion may move the first roller to the position in contact with the cloth, and in a case where the switch portion switches the work state to the second work state, the first moving portion may move the first roller to the position separated from the cloth. In this case, the first roller and the second feeding portion sandwich and press the cloths for bonding in the first work state. The adhesive applied on the cloth does not adhere to the first roller in the second work state.

In the cloth bonding apparatus, the first feeding portion may further comprise a roller support portion that rotatably supports the first roller, and the first moving portion may comprise a first air cylinder that is connected to the roller support portion. In this case, the first air cylinder can move the position of the first roller.

In the cloth bonding apparatus, the second feeding portion may comprise a first pulley that is provided opposite to the first roller, a second pulley that is provided at the nozzle position or at the upstream side of the nozzle position in the feeding direction, a belt that is crossed between the first pulley and the second pulley, and a second moving portion that moves at least one of the nozzle and the belt such that a gap between the nozzle and the belt is larger in case where the switch portion switches the work state to the first work state than the gap therebetween in a case where the switch portion switches the work state to the second work state. In this case, the cloth bonding apparatus sandwiches the cloth between the nozzle and the belt with a smaller force in the first work state. When the nozzle and the belt sandwich the cloth with a strong force, the first roller and the belt apply a tensile force to the cloth. Thus, the bonded cloths may ruck. To the contrary, the cloth bonding apparatus can reduce the force with which the nozzle and the belt sandwich the cloth in the first work state. The first roller and the belt do not apply a tensile force to the cloth. The cloth bonding apparatus can smoothly feed the cloth. The cloth bonding apparatus can prevent the bonded cloths from rucking.

The cloth bonding apparatus may further comprise a first drive portion that drives to rotate at least one of the first pulley and the second pulley thereby to drive the belt, wherein in a case where the switch portion switches the work state to the first work state, the first roller and the belt may sandwich and support the cloth and the first drive portion may drive the belt to press and feed the cloth, and in a case where the switch portion switches the work state to the second work state, the first drive portion may drive the belt to feed the cloth. In this case, the first roller and the belt sandwich and press the cloth in the first work state. The worker may place the cloth on the belt in the second work state. The cloth bonding apparatus can feed the cloth in response to the drive of the belt. The cloth bonding apparatus can feed the cloth in the first work state and in the second work state.

In the cloth bonding apparatus, the second feeding portion may comprise an urging mechanism, the urging mechanism may comprise an arm portion that rotatably supports the second pulley, and a spring that is connected to the arm portion and urges the second pulley toward the nozzle, and the second moving portion may further comprise a stopper that limits a swinging movement of the arm portion thereby to limit a movement of the second pulley toward the nozzle, and a first control portion that controls a position of the stopper. In this case, the cloth bonding apparatus can adjust a gap between the belt and the nozzle in a simple configuration.

The cloth bonding apparatus may further comprise a second air cylinder that moves the position of the stopper, wherein the first control portion may control the second air cylinder. In this case, the cloth bonding apparatus controls the second air cylinder thereby to be able to adjust the gap between the belt and the nozzle.

In the cloth bonding apparatus, the second feeding portion comprises a second roller that is provided opposite to the first roller, a third roller that is provided at the nozzle position, and a second moving portion that moves at least one of the nozzle and the third roller such that a gap between the nozzle and the third roller is larger in a case where the switch portion switches the work state to the first work state than the gap therebetween in a case where the switch portion switches the work state to the second work state. In this case, the cloth bonding apparatus can sandwich the cloth between the nozzle and the third roller with a smaller force in the first work state. When the nozzle and the third roller sandwich the cloth with a strong force, the first roller and the second roller apply a tensile force to the cloth. Thus, the bonded cloths may ruck. To the contrary, the cloth bonding apparatus can reduce the force with which the nozzle and the third roller sandwich the cloth. The first roller and the second roller do not apply a tensile force to the cloth. The cloth bonding apparatus can smoothly feed the cloth. The cloth bonding apparatus can prevent the bonded cloths from rucking.

The cloth bonding apparatus may further comprise a first drive portion that drives to rotate the second roller, and a transmitting portion that transmits a rotation drive force of the first drive portion to the third roller, wherein in a case where the switch portion switches the work state to the first work state, the first roller and the second roller may sandwich and support the cloth and the first drive portion may drive to rotate the second roller to press and feed the cloth, and in a case where the switch portion switches the work state to the second work state, the transmitting portion may drive to rotate the third roller to feed the cloth. In this case, the transmitting portion transmits the rotation drive force of the second roller to the third roller, thereby to be able to drive the rotation of the third roller. The first roller and the second roller sandwich and press the cloth in the first work state. The second roller is driven to rotate and thereby the cloth bonding apparatus feeds the cloth. The transmitting portion transmits the rotation drive force of the second roller to the third roller in the second work state. The third roller is driven to rotate, thereby to be able to feed the cloth.

In the cloth bonding apparatus, in a case where the switch portion switches the work state to the second work state, the transmitting portion may transmit the rotation drive force of the first drive portion to the third roller and in a case where switch portion switches the work state to the first work state, the transmitting portion may not transmit the rotation drive force of the first drive portion to the third roller. In this case, the transmitting portion can transmit the rotation drive force of the first drive portion to the third roller in the second work state. Since the transmitting portion does not transmit the rotation drive force to the third roller in the first work state, the third roller can freely rotate. The cloth sandwiched between the nozzle and the third roller can freely move. The first roller and the second roller do not apply a tensile force to the cloth. The cloth bonding apparatus can smoothly feed the cloth. The cloth bonding apparatus can prevent the bonded cloths from rucking.

In the cloth bonding apparatus, the transmitting portion may comprise a fourth roller that is arranged in contact with the second roller and the third roller, and while the fourth roller may be in contact with the second roller and the third roller, the first drive portion may drive to rotate the second roller, the second roller may drive to rotate the fourth roller, and the fourth roller may drive to rotate the third roller so that the fourth roller may transmit the rotation drive force of the first drive portion to the third roller. In this case, the fourth roller can transmit the rotation drive force by a frictional force between the rollers. The fourth roller can rotate along with the rotation of the second roller. The third roller can rotate along with the rotation of the fourth roller. Thus, the cloth bonding apparatus can transmit the rotation drive force of the second roller to the third roller.

In the cloth bonding apparatus, the second feeding portion may comprise an urging mechanism, the urging mechanism comprise an arm portion that rotatably supports the third roller, and a spring that is connected to the arm portion, and the second moving portion may further comprise, a stopper that limits a swinging movement of the arm portion to limit a movement of the third roller toward the nozzle, and a first control portion that controls a position of the stopper. In this case, the cloth bonding apparatus can adjust the gap between the belt and the third roller in a simple configuration.

The cloth bonding apparatus may further comprise a second air cylinder that moves the position of the stopper, wherein the first control portion controls the second air cylinder. In this case, the cloth bonding apparatus controls the second air cylinder thereby to be able to adjust the gap between the third roller and the nozzle.

The cloth bonding apparatus may further comprise a second drive portion that drives at least one of the first feeding portion and the second feeding portion, an input portion that inputs a speed, a speed determining portion that determines a feed speed of the cloth on the basis of the speed input via the input portion, and a second control portion that controls the second drive portion in order to feed the cloth at the feed speed determined by the speed determining portion, wherein in a case where the switch portion switches the work state to the first work state, the speed determining portion may determine the speed input via the input portion as the feed speed , and in a case where switch portion switches the work state to the second work state, the speed determining portion may determine a predetermined speed as the feed speed. In this case, the worker can perform the bonding work by feeding the cloth at a desired speed in the first work state. The worker can feed the cloth at a predetermined speed in the second work state.

### BRIEF DESCRIPTION OF THE DRAWINGS

Fig. 1 is an upper front perspective view of an entire cloth bonding apparatus 1;
Fig. 2 is an upper front perspective view of a bonding machine 2;
Fig. 3 is a front view of the bonding machine 2;
Fig. 4 is a left side view of the bonding machine 2;
Fig. 5 is an upper front perspective view of an internal configuration of the bonding machine 2;
Fig. 6 is an upper rear perspective view of the vicinity of a lower feeding portion 37;
Fig. 7 is a left side view of the vicinity of the lower feeding portion 37;
Fig. 8 is a front view of the vicinity of the lower feeding portion 37;
Fig. 9 is a left side view of the vicinity of the lower feeding portion 37 in a second work state;
Fig. 10 is a left side view of the vicinity of the lower feeding portion 37 in a first work state;
Fig. 11 is a block diagram showing an electric configuration of the cloth bonding apparatus 1;
Fig. 12 is a flow chart showing a cloth bond processing;
Fig. 13 is an upper front perspective view of a bonding machine 5;
Fig. 14 is an upper front perspective view of the internal configuration of the bonding machine 5;
Fig. 15 is an upper rear perspective view of the vicinity of a lower feeding portion 38;
Fig. 16 is an upper rear perspective view of a fourth roller support portion 280;
Fig. 17 is a left side view of the vicinity of the lower feeding portion 38;
Fig. 18 is a front view of the vicinity of the lower feeding portion 38;
Fig. 19 is a sectional view taken along line I-I in Fig. 15 in the first work state;
Fig. 20 is a sectional view taken along line I-I in Fig. 15 in the second work state;
Fig. 21 is a block diagram showing an electric configuration of the cloth bonding apparatus 1;
Fig. 22 is a flow chart showing a cloth bond processing;
Fig. 23 is a left side view of the vicinity of the lower feeding portion 38 in the second work state; and
Fig. 24 is a left side view of the vicinity of the lower feeding portion 38 in the first work state.

### DETAILED DESCRIPTION OF THE EMBODIMENTS

A cloth bonding apparatus according to the present invention will be described below with reference to the drawings.

### <First embodiment>

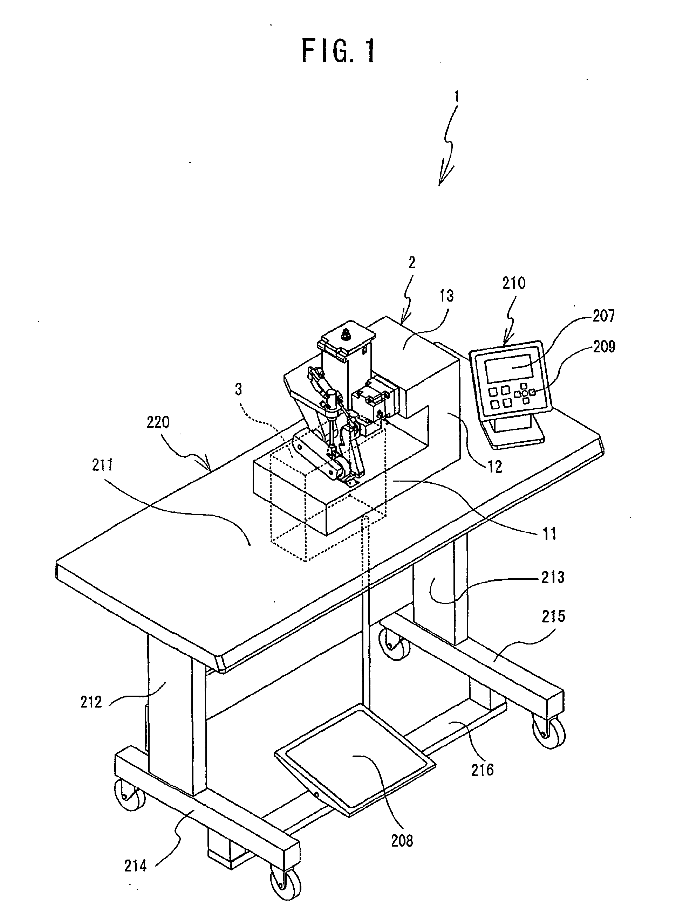

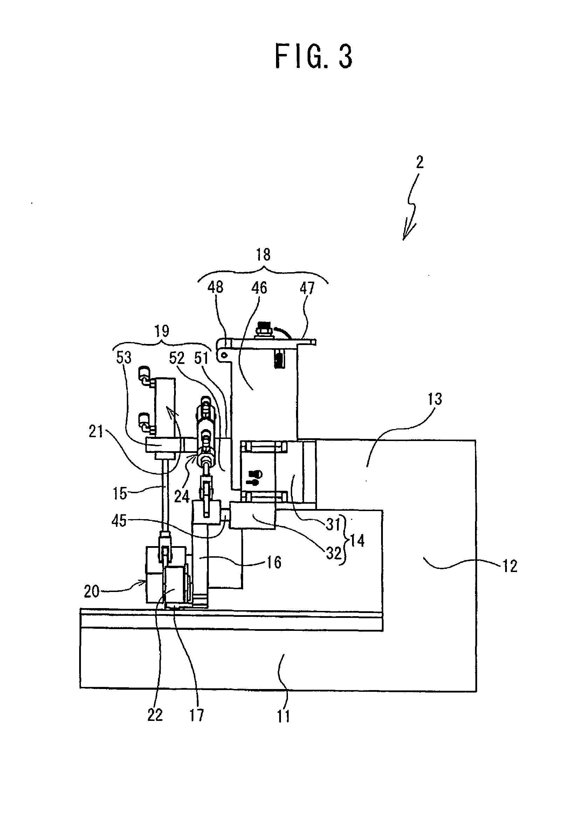

A configuration of the cloth bonding apparatus 1 will be described with reference to Figs. 1 to 4. In the following description, it is defined that the upper side, the lower side, the right side, the left side, the front face side, and the back face side of the bonding machine 2 shown in Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the bonding machine 2 by operating the keys 209 while looking at the LCD portion 207.

The left leg portion 212 having a plate shape extends vertically downwards from the left end of the top board 211. The right leg portion 213 having a plate shape extends vertically downwards from the right end of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

The foot holder 216 having an elongated plate shape connects the left support portion 214 and the right support portion 215. A pedal 208 is provided on the foot holder 216.

A control box 3 is fixed at the lower face of the top board 211. The control box 3 stores a control substrate having a CPU 200 and the like mounted thereon. The control box 3 is electrically connected to the bonding machine 2, the operation panel 210, and the pedal 208.

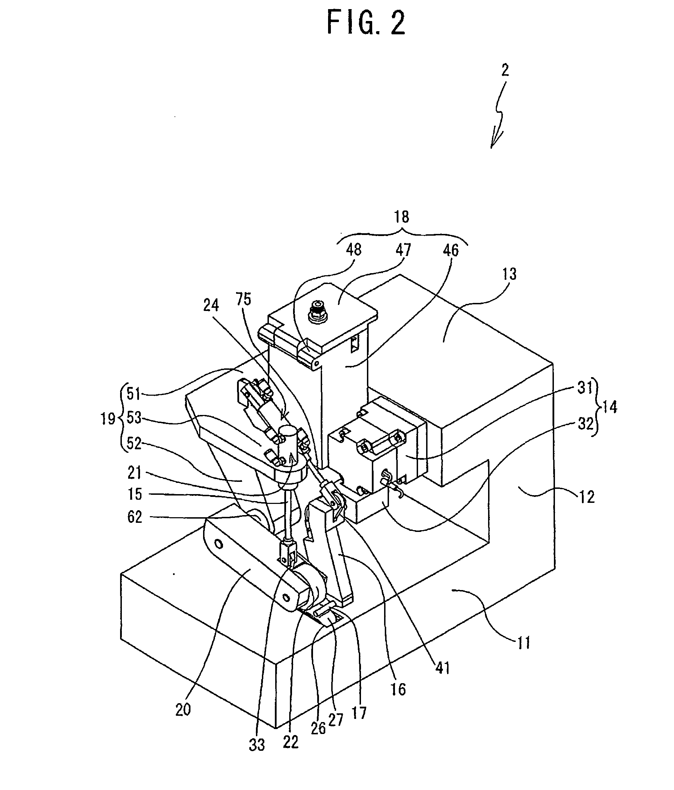

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The pillar portion 12 extends vertically upwards from the right end of the bed portion 11. The arm portion 13 is connected to the upper end of the pillar portion 12 and extends leftward from the left side of the pillar portion 12.

The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order.

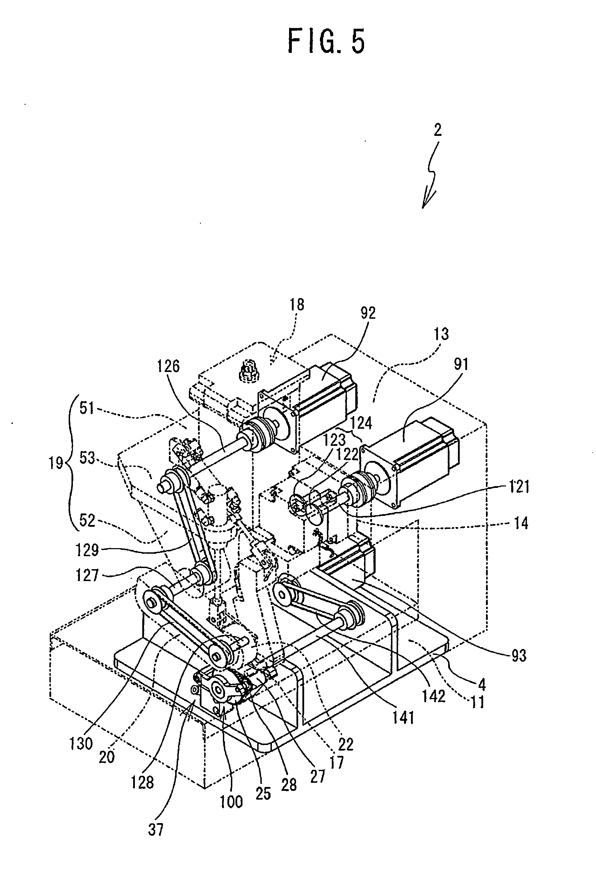

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein a gear pump 124 (see Fig. 5) and the like. The gear pump 124 supplies an appropriate amount of adhesive to a nozzle 17 with high accuracy. The second pump casing 32 is a substantially rectangular parallelepiped member. The second pump casing 32 extends downward from the left end portion of the lower face of the first pump casing 31.

The second pump casing 32 includes a shaft portion 45 (see Fig. 3) on its left side. The shaft portion 45 is connected to the right side of an upper end portion of a support portion 16 and swingably supports the support portion 16. The pump casing 14 includes a channel. The channel leads an adhesive from the storage chamber 18 to the gear pump 124.

As shown in Figs. 2 and 3, the shape of the support portion 16 is substantially rectangular parallelepiped with the vertical direction as the longitudinal direction. A small gap is present between the lower end portion of the support portion 16 and the bed portion 11. The support portion 16 includes therein a channel. The channel leads the adhesive from the pump casing 14 to the nozzle 17. The support portion 16 includes the nozzle 17 at the lower end portion. The nozzle 17 extends leftward from the support portion 16. The support portion 16 includes a drive transmitting portion 41 at the upper end portion. The drive transmitting portion 41 supports an end portion of a movable portion 75 of an air cylinder 24.

The air cylinder 24 includes air inlet ports. An intake/exhaust hose (not shown) is connected to each of the air inlet ports. The cloth bonding apparatus 1 controls an intake and an exhaust of a compressed air through the air inlet ports. The position of a piston inside a body portion of the air cylinder 24 moves in accordance with the intake and exhaust control. The movable portion 75 is connected to the piston. Thus, the movable portion 75 moves back and forth along with the movement of the piston. The support portion 16 swings back and forth about the shaft portion 45 along with the back-and-forth movement of the movable portion 75 of the air cylinder 24. The nozzle 17 moves along with the swing of the support portion 16 to a position where the cloth bonding work is performed and to a position where maintenance is performed.

The nozzle 17 has a cylindrical shape. The nozzle 17 has a discharge port from which the adhesive is discharged at the bottom. When the worker performs the cloth bonding work, the discharge port opposes the bed portion 11. The gear pump 124 supplies the adhesive to the nozzle 17 through the channel provided inside the support portion 16. The nozzle 17 discharges the adhesive from the discharge port onto the cloth. The adhesive may be applied on the surface of the cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a cover shaft portion 48. The shape of the body portion 46 has a bottomed tube shape having an opening at the top. The cover portion 47 covers the opening at the top of the body portion 46. The body portion 46 has the cover shaft portion 48 at its upper end. The cover shaft portion 48 supports the cover portion 47 in an openable/closable manner. The storage chamber 18 stores a hot-melt adhesive (not shown) inside the body portion 46. The stored adhesive may be supplied from the storage chamber 18 to the gear pump 124 and to the nozzle 17 as needed. The hot-melt adhesive melts when heated to a predetermined temperature, and solidifies at a temperature below the predetermined temperature.

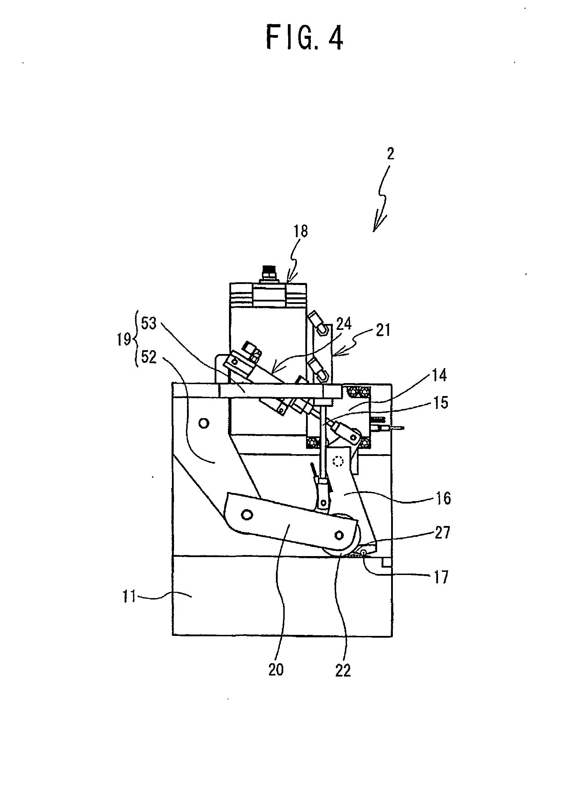

As shown in Fig. 2, the beam potion 19 includes a body portion 51, a cylinder support portion 53, and a column portion 52. The body portion 51 is a member extending horizontally leftward from the rear left end of the arm portion 13. The cylinder support portion 53 has a plate shape and extends horizontally forward from the left end portion of the body portion 51. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, a body portion of an air cylinder 21 is provided at the front end portion of the cylinder support portion 53. The air cylinder 21 includes air inlet ports. An intake/exhaust hose (not shown) is connected to each of the air inlet ports. The cloth bonding apparatus 1 controls an intake and an exhaust of a compressed air through the air inlet ports. The position of a piston inside the body portion of the air cylinder 21 moves in accordance with the intake and exhaust control. A movable portion 15 is connected to the piston. The movable portion 15 moves in the vertical direction along with the movement of the piston. The column portion 52 has a shaft portion 62 extending horizontally leftward from the lower end portion thereof. The shaft portion 62 supports the rear end portion of a roller holding portion 20. The roller holding portion 20 swings its front end portion in the vertical direction with the shaft portion 62 as the center of swing. The body portion 51 is provided with the air cylinder 24 at the right side of the cylinder support portion 53. The air cylinder 24 is directed for switching the position of the support portion 16.

The roller holding portion 20 will be described. The front end portion of the roller holding portion 20 rotatably supports the first roller 22 having a cylindrical shape. The first roller 22 is positioned in the vicinity of the back of the nozzle 17 that extends from the support portion 16.

The roller holding portion 20 includes a shaft support portion 33 on the upper face at a slightly forward position from the center. The shaft support portion 33 is connected to the lower end portion of the movable portion 15.

As shown in Fig. 2, the bed portion 11 is provided with a hole 26 below the first roller 22 and below the nozzle 17. A part of a belt 27 inside the bed portion 11 slightly projects upward from the hole 26. The belt 27 moves from the front of the bonding machine 2 to the back thereof. The belt 27 feeds the cloth from front to back.

A gap between the first roller 22 and the belt 27 changes along with the movement of the piston of the air cylinder 21. As shown in Fig. 4, the roller holding portion 20 is tilted diagonally down and forward in a state where the movable portion 15 has moved downward. The gap between the first roller 22 and the belt 27 is small. The roller holding portion 20 is substantially horizontal in a state where the movable portion 15 has moved upward. The gap between the first roller 22 and the belt 27 becomes larger in this state.

The inner configuration of the bonding machine 2 will be described below with reference to Fig. 5. The bonding machine 2 includes therein a first motor 91, a second motor 92, a third motor 93, a lower feeding portion 37 and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the first roller 22 via rotary shafts 126, 127, 128 and belts 129, 130 thereby driving the first roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion of the roller holding portion 20. The right end and left end of the rotary shaft 127 each support a pulley. The rotary shaft 128 is a rotary shaft of the first roller 22. The left end of the rotary shaft 128 is positioned inside the front end portion of the roller holding portion 20 and supports a pulley. The right end of the rotary shaft 128 projects from the front end portion of the roller holding portion 20 and supports the first roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The first roller 22 rotates along with the rotation of the second motor 92.

The third motor 93 transmits a rotation drive force to a first pulley 25 via a rotary shaft 141 and a belt 142 thereby rotating the first pulley 25. The rotary shaft 141 is a rotary shaft of the first pulley 25. The right end portion of the rotary shaft 141 extends rightward inside the bed portion 11 and supports the pulley. The bed portion 11 has a support bed 4 therein. The support bed 4 rotatably supports the rotary shaft 141. The belt 142 is crossed between a pulley of a rotary shaft of the third motor 93 and a pulley at the right side of the rotary shaft 141, inside the bed portion 11. The first pulley 25 rotates along with the rotation of the third motor 93.

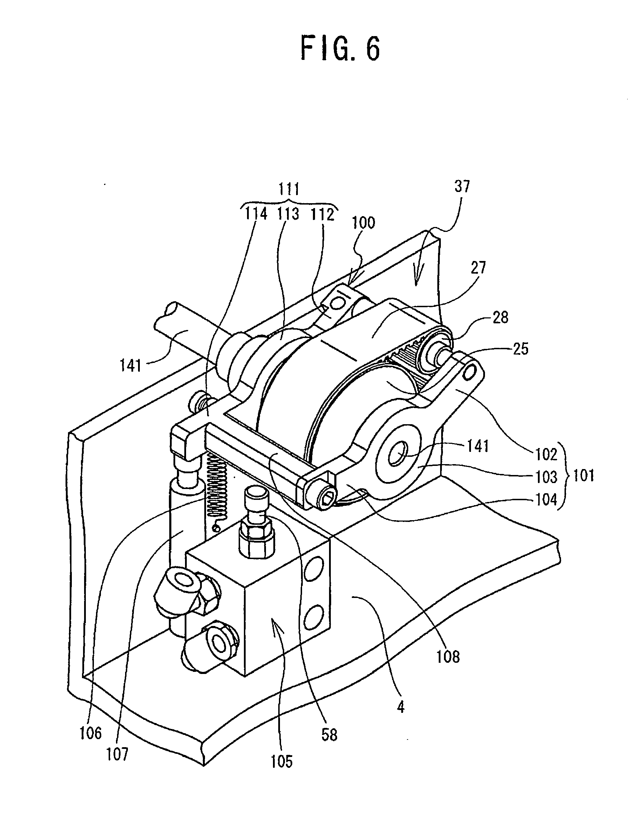

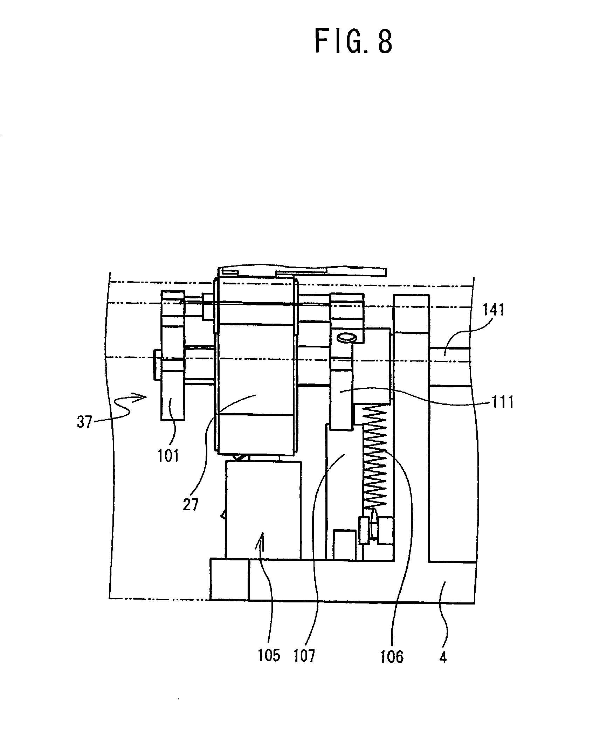

The lower feeding portion 37 will be described with reference to Figs. 6 to 8. The upper right, the lower left, the upper left, and the lower right of Fig. 6 correspond to the front side, the back side, the right side, and the left side of the lower feeding portion 37, respectively. The lower feeding portion 37 includes the first pulley 25, a second pulley 28, a pulley support portion 100, the belt 27 and a spring 106. The pulley support portion 100 rotatably supports the second pulley 28. The belt 27 is a meshed belt. The shape of the first pulley 25 and the second pulley 28 is a cylindrical shape. The first pulley 25 is provided below the first roller 22. The second pulley 28 is provided diagonally in front of and below the nozzle 17.

As shown in Fig. 6, the pulley support portion 100 includes a left side plate portion 101, a right side plate portion 111, and a bridging portion 108. The left side plate portion 101 having a plate shape is positioned at the left side of the first pulley 25 and the second pulley 28. The right side plate portion 111 having a plate shape is positioned at the right side of the first pulley 25 and the second pulley 28. The bridging portion 108 connects the left side plate portion 101 and the right side plate portion 111.

The left side plate portion 101 includes a first arm portion 102, a ring portion 103, and a second arm portion 104. The ring portion 103 having a circular plate shape is positioned in parallel with the left end surface of the first pulley 25. The center of the ring portion 103 is at the same position as the center of a rotary shaft of the first pulley 25. The ring portion 103 includes a hole at its center. The rotary shaft 141 of the first pulley 25 is inserted into the hole. The second arm portion 104 extends horizontally backward from the ring portion 103. The first arm portion 102 extends diagonally in front of the ring portion 103 at about 45 degrees.

The right side plate portion 111 is positioned at the right side of the first pulley 25 and the second pulley 28. The right side plate portion 111 has substantially the same shape as the left side plate portion 101. The right side plate portion 111 includes a first arm portion 112, a ring portion 113, and a second arm portion 114. The length of the second arm portion 114 in the back-and-forth direction is slightly longer than the length of the second arm portion 104 in the back-and-forth direction. The ring portion 113 includes a hole at its center. The rotary shaft 141 of the first pulley 25 is inserted into the hole.

The first arm portion 102 and the first arm portion 112 have a hole at their front end portion, respectively. A rotary shaft of the second pulley 28 is inserted into these holes. The first arm portion 102 and the first arm portion 112 rotatably support the second pulley 28. The bridging portion 108 extends rightward from the end portion of the second arm portion 104 and is connected to the second arm portion 114.

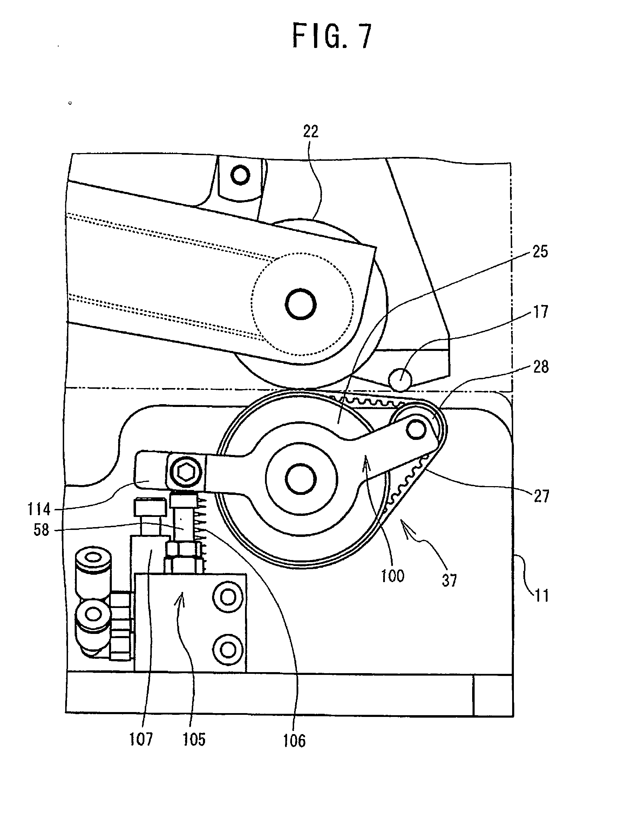

As shown in Figs. 6 and 7, the belt 27 is crossed between the first pulley 25 and the second pulley 28. The belt 27 rotates along with the rotation of the first pulley 25.

An air cylinder 105 is provided below the bridging portion 108. The air cylinder 105 includes air inlet ports. An intake/exhaust hose (not shown) is connected to each of the air inlet ports. The cloth bonding apparatus 1 controls an intake and an exhaust of a compressed air through the air inlet ports. The position of a piston inside the air cylinder 105 moves in accordance with the intake and exhaust control. The movable portion 58 is connected to the piston. Thus, the movable portion 58 moves in the vertical direction along with the movement of the piston. The movable portion 58 can abut against the bridging portion 108.

A stopper 107 is provided below the second arm portion 114. The stopper 107 has a bar shape with the vertical direction as the longitudinal direction. The stopper 107 extends vertically upwards from the support bed 4. The stopper 107 can change the length in the vertical direction. The stopper 107 can abut against the rear end portion of the second arm portion 114.

As shown in Fig. 6, a spring 106 is provided in front of the stopper 107. The lower end portion of the spring 106 is connected to the support bed 4. The upper end portion of the spring 106 is connected to the right side of the second arm portion 114 and to substantially the center portion of the second arm portion 114 in the back-and-forth direction. The spring 106 pulls the second arm portion 114 downward. The pulley support portion 100 swings about the rotary shaft 141. The first arm portion 102 and the first arm portion 112 are raised due to the urging force of the spring 106. Consequently, the second pulley 28 moves upward.

As shown in Fig. 7, a part of the belt 27 slightly projects upward from the hole 26 (see Fig. 2) of the bed portion 11. The movable portion 58 moves in the vertical direction and adjusts a swingable range of the pulley support portion 100. By changing the length of the stopper 107 in the vertical direction, the swingable range of the pulley support portion 100 can be also adjusted. The movable portion 58 and the stopper 107 can adjust an amount of an upward movement of the belt 27.

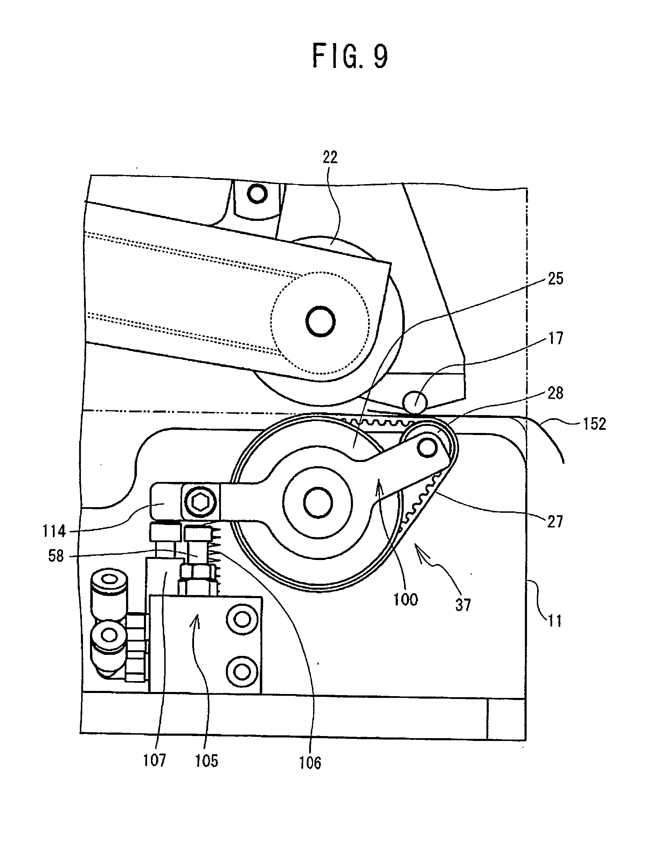

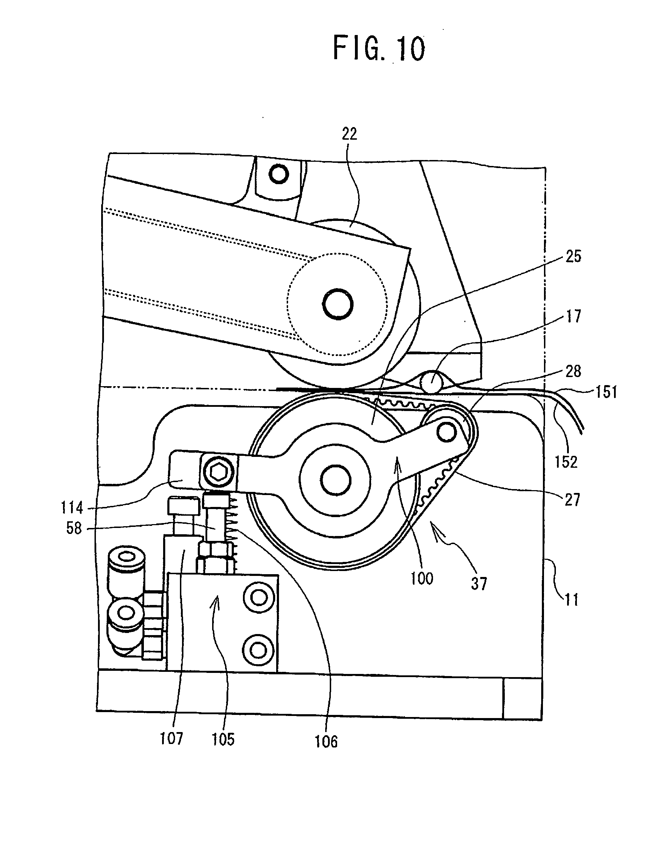

The vicinity of the first roller 22 and the lower feeding portion 37 during the bonding work will be described with reference to Figs. 9 and 10. Fig. 10 shows a first work state. Fig. 9 shows a second work state. The movable portion 15 (see Fig. 2) of the air cylinder 21 moves downward to move the first roller 22 downward in the first work state. The movable portion 58 of the air cylinder 105 moves upward to move the front of the belt 27 downward in the first work state. The movable portion 15 of the air cylinder 21 moves upward to move the first roller 22 upward in the second work state. The movable portion 58 of the air cylinder 105 moves downward to move the front of the belt 27 upward in the second work state.

The worker selects the second work state when applying the adhesive to a lower cloth 152 while an upper cloth 151 (see Fig. 10) is not being laid on the lower cloth 152. The worker selects the first work state when laying the upper cloth 151 on the lower cloth 152 and bonding the upper cloth 151 and the lower cloth 152 while the adhesive is being discharged to the lower cloth 152. The worker first selects the second work state and performs the work. The adhesive is applied to an end portion arranged at the most downstream side in the feeding direction of the lower cloth 152. Next, the worker lays the upper cloth 151 on the adhesive-applied lower cloth 152. The worker selects the first work state and performs the work. The upper cloth 151 and the lower cloth 152 are bonded with each other.

As shown in Fig. 9, the worker operates the key 209 to select the second work state. The movable portion 15 (see Fig. 2) of the air cylinder 21 moves upward. The first roller 22 moves upward. The gap between the first roller 22 and the belt 27 becomes larger. The movable portion 58 of the air cylinder 105 moves downward. The second pulley 28 moves upward. The gap between the belt 27 and the nozzle 17 becomes smaller.

The worker places the end portion of the lower cloth 152 on the belt 27. The nozzle 17 and the belt 27 sandwich the lower cloth 152. The worker steps on and presses down the pedal 208 (see Fig. 1). The gear pump 124 rotates. The adhesive flows through the channels and is discharged from the discharge port of the nozzle 17. The adhesive adheres to the lower cloth 152. The first pulley 25 rotates. The belt 27 crossed between the first pulley 25 and the second pulley 28 rotates. The first pulley 25 always rotates at a constant speed in the second work state irrespective of a stepping amount of the pedal 208.

The lower cloth 152 moves from front to back and approaches the first roller 22. The gap between the first roller 22 and the belt 27 is large. Therefore, the lower cloth 152 does not contact the first roller 22. Thus, the adhesive applied to the lower cloth 152 does not adhere to the first roller 22. The cloth bonding apparatus 1 can prevent the adhesive from adhering to and contaminating the first roller 22. Since the belt 27 can feed the lower cloth 152, the cloth bonding apparatus 1 can discharge the adhesive to the end portion of the lower cloth 152.

The worker then places the upper cloth 151 on the adhesive-applied lower cloth 152. The upper cloth 151 and the lower cloth 152 sandwich the nozzle 17. The worker operates the key 209 to select the first work state.

As shown in Fig. 10, the movable portion 15 (see Fig. 2) of the air cylinder 21 moves downward. The first roller 22 moves downward. The gap between the first roller 22 and the belt 27 becomes smaller. The first roller 22 contacts the upper cloth 151. The first roller 22 and the belt 27 sandwich and press the upper cloth 151 and the lower cloth 152 in the vertical direction. The movable portion 58 of the air cylinder 105 moves upward. The second pulley 28 moves downward. The gap between the belt 27 and the nozzle 17 becomes larger. The force with which the nozzle 17 and the belt 27 sandwich the lower cloth 152 becomes smaller.

When the worker steps on and presses down the pedal 208, the gear pump 124 rotates. The adhesive is discharged from the discharge port of the nozzle 17 along with the rotation of the gear pump 124. The adhesive adheres to the lower cloth 152. The first pulley 25 rotates. The belt 27 crossed between the first pulley 25 and the second pulley 28 rotates. Thus, the upper cloth 151 and the lower cloth 152 on the upper side of the belt 27 move from front to back. The first pulley 25 rotates at a speed proportional to the stepping amount of the pedal 208 in the first work state.

The first roller 22 and the belt 27 press the upper cloth 151 and the lower cloth 152 in the vertical direction and bond them. The gap between the belt 27 and the nozzle 17 is made larger. Thus, the force with which the belt 27 and the nozzle 17 sandwich the lower cloth 152 is small. Since the first roller 22 and the belt 27 do not apply a tensile force to the upper cloth 151 and the lower cloth 152, both the upper cloth 151 and the lower cloth 152 smoothly move and the bonded cloths 151 and 152 will not ruck.

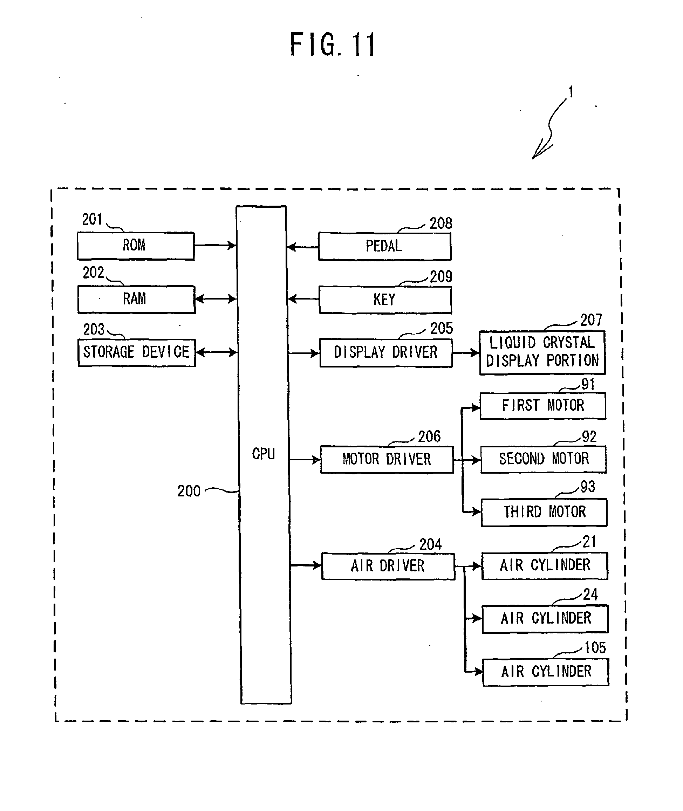

An electrical configuration of the cloth bonding apparatus 1 will be described with reference to Fig. 11. The cloth bonding apparatus 1 includes the CPU 200, a ROM 201, a RAM 202, and a storage device 203. The CPU 200 performs reception processing and control processing. The reception processing is a processing for receiving input information from the key 209, the pedal 208, and the like. The control processing is a processing for controlling the motors and the like. The ROM 201 stores programs to be executed by the CPU 200 and various default parameters and the like. The RAM 202 temporarily stores timers, counters, flags, and the like. The storage device 203 stores various setting information inputted by the worker. The CPU 200 is electrically connected to the ROM 201, the RAM 202, and the storage device 203, respectively. The CPU 200 can access storage areas of the ROM 201, the RAM 202, and the storage device 203.

The pedal 208 is electrically connected with the CPU 200. The worker may use the pedal 208 to adjust the feed speed of the cloths. The CPU 200 recognizes an amount by which the pedal 208 is pressed down (hereinafter referred to as an adjustment amount). The CPU 200 determines a rotation speed of the first roller 22 and the first pulley 25, and rotation speed of the drive gear 122 and the driven gear 123, on the basis of the recognized adjustment amount of the pedal 208.

The keys 209 are electrically connected with the CPU 200. The worker may use the keys 209 to enter various operation settings. The CPU 200 recognizes the press state of the keys 209 operated by the worker. The CPU 200 stores the information inputted by the worker in the storage device 203, on the basis of the recognized press state of the keys 209.

A display driver 205 is electrically connected with the CPU 200. The LCD portion 207 is electrically connected with the display driver 205. The CPU 200 displays desired information on the LCD portion 207 via the display driver 205.

A motor driver 206 is electrically connected with the CPU 200. The motors 91 to 93 each are electrically connected with the motor driver 206. The CPU 200 controls the motors 91 to 93 via the motor driver 206.

An air driver 204 is electrically connected to the CPU 200. The air driver 204 is electrically connected to the air cylinders 21, 24 and 105. The CPU 200 controls the air pressure to be fed into the air inlet ports of the air cylinders 21, 24 and 105 via the air driver 204. The first roller 22 moves in the vertical direction in accordance with the operation of the air cylinder 21. The support portion 16 moves to the use position or to the maintenance position in accordance with the operation of the first air cylinder 24. The second pulley 28 moves in the vertical direction in accordance with the operation of the air cylinder 105.

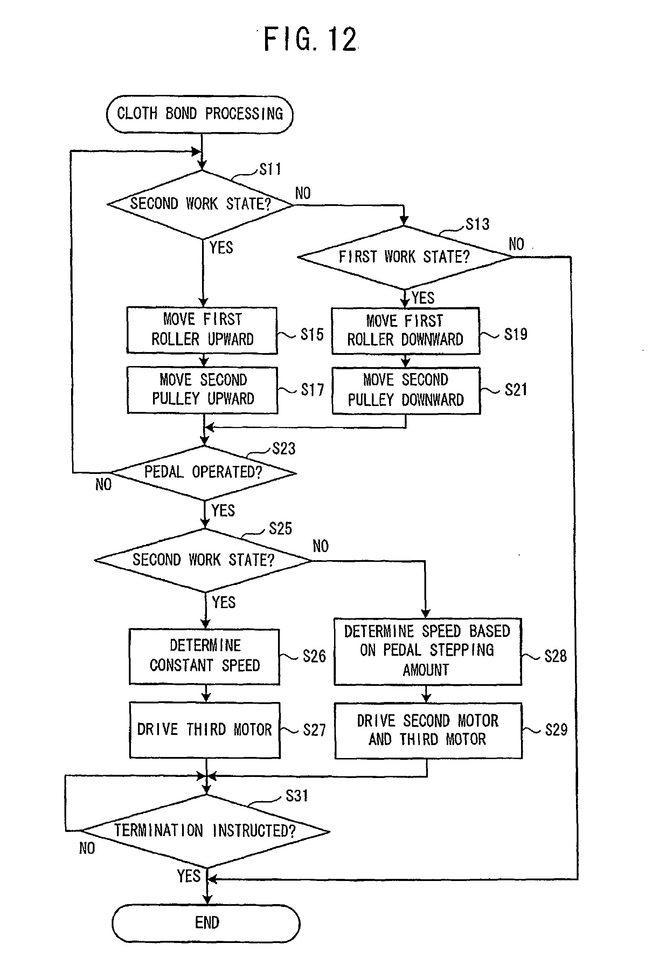

A cloth bond processing will be described with reference to Fig. 12. When the worker operates the key 209, the CPU 200 performs the cloth bond processing.

The CPU 200 determines whether the worker has operated the key 209 and selected the second work state (S11). In a case where the worker has selected the second work state (S11: YES), the CPU 200 moves the movable portion 15 of the air cylinder 21 upward. The first roller 22 moves upward (S15). The gap between the first roller 22 and the belt 27 becomes larger. The CPU 200 moves the movable portion 58 of the air cylinder 105 downward. The second pulley 28 moves upward (S17). The front portion of the belt 27 projects upward from the hole 26 below the nozzle 17. The gap between the belt 27 and the nozzle 17 becomes smaller. The belt 27 and the nozzle 17 sandwich the lower cloth 152. The CPU 200 then proceeds to the processing of S23.

In a case where the worker has selected the first work state (S11: NO, S13: YES), the CPU 200 moves the movable portion 15 of the air cylinder 21 downward. The first roller 22 moves downward (S19). The gap between the first roller 22 and the belt 27 becomes smaller. The CPU 200 moves the movable portion 58 of the air cylinder 105 upward. The second pulley 28 moves downward (S21). The front portion of the belt 27 does not project from the hole 26. The gap between the belt 27 and the nozzle 17 becomes larger. Therefore, the force with which the belt 27 and the nozzle 17 sandwich the lower cloth 152 becomes smaller. The CPU 200 then proceeds to the processing of S23.

In a case where the worker has selected neither the first work state nor the second work state (S13: NO), the CPU 200 terminates the cloth bond processing.

The CPU 200 determines whether the worker has stepped on and pressed down the pedal 208 (S23). In a case where the worker has not stepped on and pressed down the pedal 208 (S23: NO), the processing returns to step S11. In a case where the worker has stepped on and pressed down the pedal 208 (S23: YES), the CPU 200 determines the work state selected by the worker via the key 209 (S25). In a case where the worker has selected the second work state (S25: YES), the CPU 200 determines the rotation speed of the third motor 93 at a constant speed (S26). The CPU 200 rotates the third motor 93 at the determined rotation speed (S27). The first pulley 25 rotates at a constant speed. The belt 27 rotates at the constant speed. The belt 27 also feeds the lower cloth 152 at the constant speed. The CPU 200 rotates the first motor 91 at a constant speed. Thus, the adhesive is discharged from the nozzle 17 by a constant amount. The CPU 200 then proceeds to the processing of S31.

In a case where the worker has selected the first work state (S25: NO), the CPU 200 determines the rotation speeds of the second motor 92 and the third motor 93 at respective speeds proportional to the stepping amount of the pedal 208 (S28). The CPU 200 rotates the second motor 92 and the third motor 93 at the determined speeds (S29). The upper cloth 151 and the lower cloth 152 move at the speeds proportional to the stepping amount. The first roller 22 and the belt 27 press and bond the upper cloth 151 and the lower cloth 152. The CPU 200 rotates the first motor 91 at a rotation speed proportional to the stepping amount. Thus, the discharged amount of the adhesive is proportional to the stepping amount. The CPU 200 proceeds to the processing of S31.

The CPU 200 determines whether the worker has performed an operation for terminating the bonding work (S31). In the case where the worker has not performed the operation for terminating (S31: NO), the processing returns to step S31. In a case where the worker has performed the operation for terminating (S31: YES), the CPU 200 terminates the cloth bond processing.

As described above, the worker can switch the first work state and the second work state to perform the cloth bonding work. The cloth bonding apparatus 1 moves the first roller 22 away from the lower cloth 152 in the second work state. The worker places the lower cloth 152 on the belt 27. Even when the upper cloth 151 is not placed on the adhesive-applied lower cloth 152, the adhesive does not adhere to the first roller 22 since the first roller 22 does not contact the lower cloth 152. Thus, even when it is difficult to place the upper cloth 151 on the lower cloth 152, the cloth bonding apparatus 1 can perform the bonding work without the adhesive adhering to the first roller 22. Since the belt 27 feeds the cloth, the cloth bonding apparatus 1 can discharge the adhesive to the end of the cloth arranged at the most downstream side in the feeding direction of the cloth.

The first roller 22 abuts the upper cloth 151 in the first work state. The first roller 22 and the belt 27 can bond the upper cloth 151 and the lower cloth 152 by pressing and feeding the upper cloth 151 and the lower cloth 152. The cloth bonding apparatus 1 moves the second pulley 28 downward in the first work state. The force with which the belt 27 and the nozzle 17 sandwich the cloth becomes smaller. Thus, the cloth bonding apparatus 1 can prevent the bonded cloths from rucking or being distorted.

The cloth bonding apparatus 1 feeds the cloth always at a constant speed in the second work state irrespective of the stepping amount of the pedal 208. Therefore, the cloth bonding apparatus 1 can prevent the feed speed from becoming too fast due to the too much stepping amount of the pedal 208 by the worker. Thus, even a worker who is unfamiliar with the operation can feed the cloth by a predetermined amount and discharge a predetermined amount of adhesive.

The "first roller 22" correspond to the "first feeding portion" of the present invention. The lower feeding portion 37 corresponds to the "second feeding portion" of the present invention. The CPU 200 that performs the processings of S 11, S 13 and S25 in Fig. 12 corresponds to the "switch portion" of the present invention. The air cylinder 21 corresponds to the "first moving portion" and the "first air cylinder" of the present invention. The movable portion 58 and the CPU 200 that performs the processings of S17 and S21 in Fig. 12 correspond to the "second moving portion" of the present invention. The movable portion 58 corresponds to the "stopper" of the present invention. The CPU 200 that performs the processings of S17 and S21 in Fig. 12 corresponds to the "first control portion" of the present invention. The pulley support portion 100 corresponds to the "arm portion", the spring 106 corresponds to the "spring" of the present invention, and the pulley support portion 100 and the spring 106 correspond to the "urging mechanism" of the present invention. The third motor 93 that rotates the first pulley 25 corresponds to the "first drive portion" of the present invention. The air cylinder 105 corresponds to the "second air cylinder" of the present invention.

The second motor 92 and the third motor 93 correspond to the "second drive portion" of the present invention. The pedal 208 corresponds to the "input portion" of the present invention. The CPU 200 that performs S26 and S28 in Fig. 12 corresponds to the "speed determining portion" of the present invention, and the CPU 200 that performs S27 and S29 corresponds to the "second control portion" of the present invention.

In the first embodiment, the cloth bonding apparatus 1 adjusts the gap between the belt 27 and the nozzle 17 by moving the second pulley 28 in the vertical direction. The cloth bonding apparatus 1 may adjust the gap between the belt 27 and the nozzle 17 by moving the movable portion 75 of the air cylinder 24 back and forth to move the support portion 16 and thus moving the nozzle 17 in the vertical direction.

In the first embodiment, the cloth bonding apparatus 1 moves the second pulley 28 in the vertical direction by moving the movable portion 58 of the air cylinder 105 in the vertical direction. The cloth bonding apparatus 1 may use the stopper 107 as follows. The worker selects the second work state. The worker can previously adjust the vertical length of the stopper 107 such that the front portion of the belt 27 projects from the hole 26. The belt 27 can press the cloth to the nozzle 17 with a proper force.

### <Second embodiment>

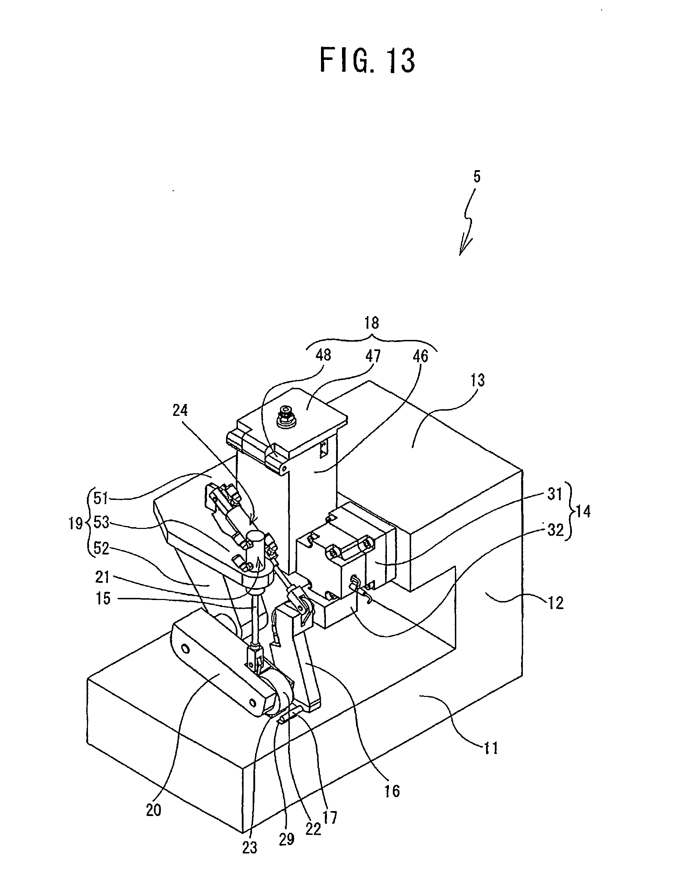

A second embodiment will be described. A configuration of a bonding machine 5 will be described with reference to Fig. 13. As shown in Fig. 13, the bed portion 11 is provided with a hole 23 below the first roller 22. A part of a second roller 232 (see Fig, 15) inside the bed portion 11 slightly projects upward from the hole 23. The second roller 232 rotates with the first roller 22. The first roller 22 and the second roller 232 feed the cloths sandwiched between the rollers 22 and 232 from front to back.

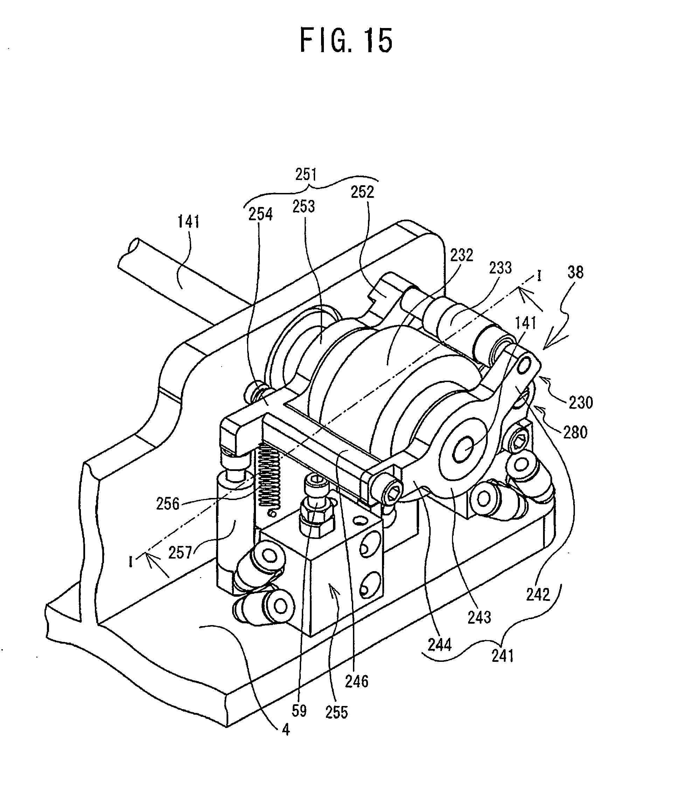

The bed portion 11 is provided with a hole 29 below the nozzle 17. A part of a third roller 233 (see Fig. 15) inside the bed portion 11 slightly projects upward from the hole 29. The third roller 233 rotates to feed the cloths sandwiched between the nozzle 17 and the third roller 233 from front to back. The third roller 233 urges the cloth upward.

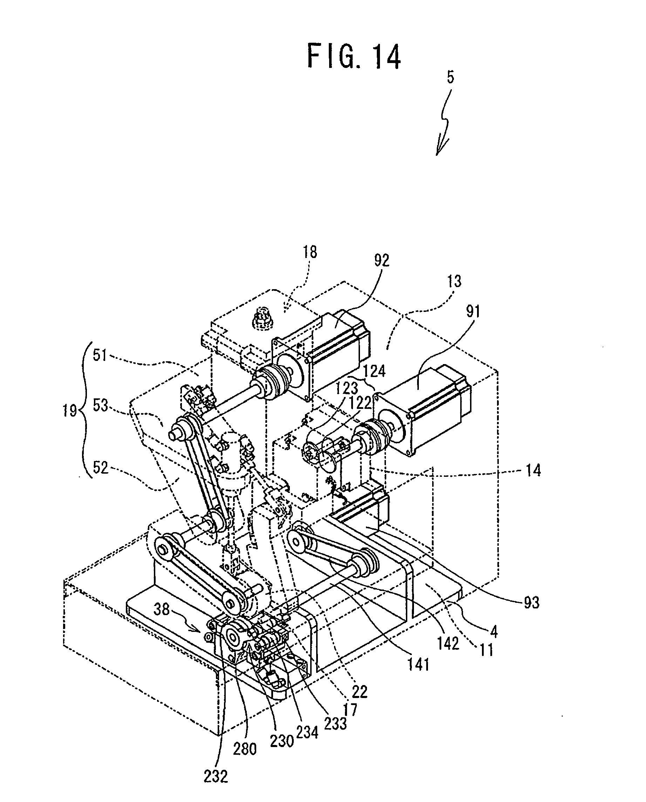

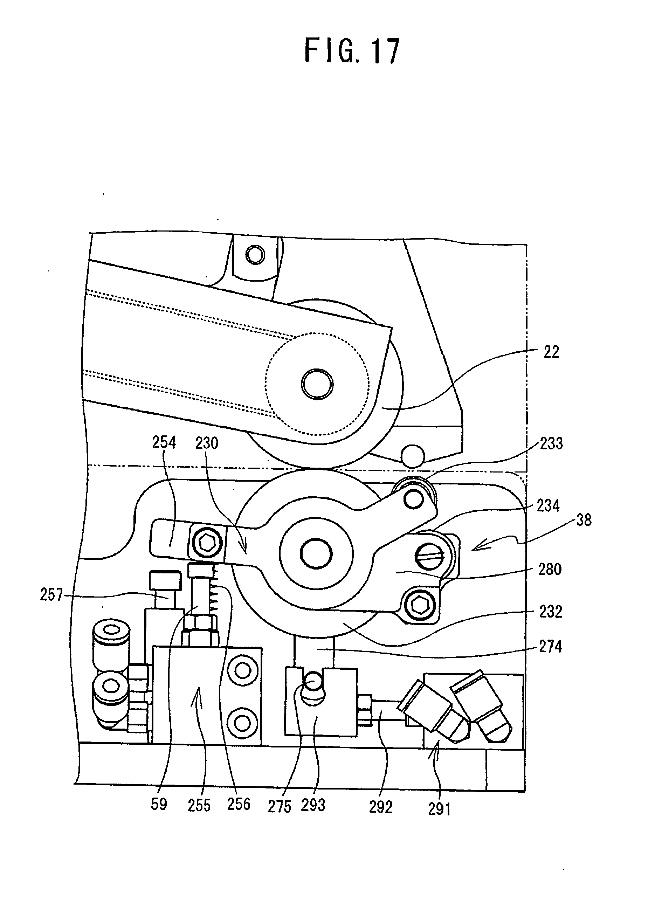

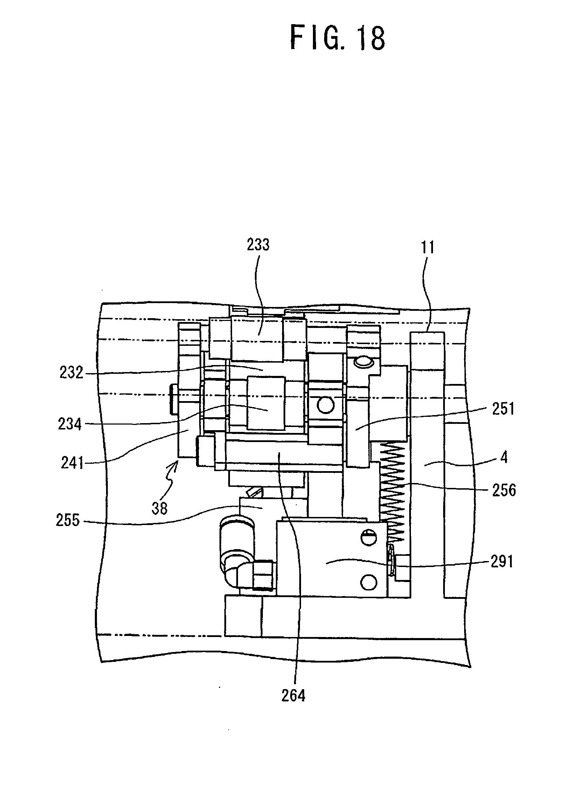

The internal configuration of the bonding machine 5 will be described with reference to Figs. 14 to 18. The bonding machine 5 includes a lower feeding portion 38. The front face side, the back face side, the right side and the left side of Fig. 17 correspond to the left side, the right side, the front side and the back side of the lower feeding portion 38, respectively.

As shown in Figs. 14 and 15, the lower feeding portion 38 includes the second roller 232, the third roller 233, a fourth roller 234, a third roller support portion 230, a fourth roller support portion 280 and a spring 256. The third roller support portion 230 supports the third roller 233. The fourth roller support portion 280 supports the fourth roller 234. The shape of the second roller 232, the third roller 233 and the fourth roller 234 is cylindrical. The second roller 232 is provided below the first roller 22. The third roller 233 is provided below the nozzle 17. The fourth roller 234 is provided below the third roller 233.

As shown in Fig. 15, the fourth roller support portion 280 sandwiches the second roller 232 from left and right. The third roller support portion 230 sandwiches the fourth roller support portion 280 from left and right. The spring 256 is connected to the third roller support portion 230. A stopper 257, an air cylinder 255 and an air cylinder 291 (see Fig. 17) are provided below the lower feeding portion 38.

The third roller support portion 230 will be described. As shown in Figs. 15, the third roller support portion 230 includes a left side plate portion 241, a right side plate portion 251 and a bridging portion 246. The left side plate portion 241 having a plate shape is positioned at the left side of the second roller 232 and the third roller 233. The right side plate portion 251 having a plate shape is positioned at the right side of the second roller 232 and the third roller 233. The bridging portion 246 connects the left side plate portion 241 and the right side plate portion 251.

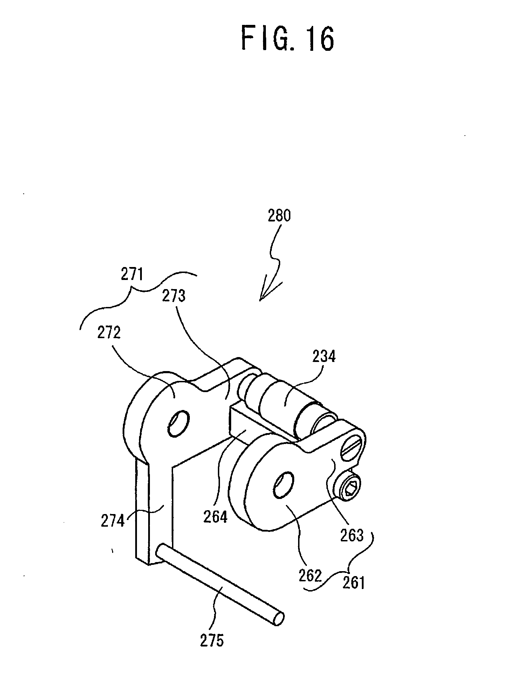

As shown in Fig. 15, the left side plate portion 241 includes a first arm portion 242, a ring portion 243 and a second arm portion 244. The ring portion 243 having a circular plate shape is positioned in parallel with the left side of a ring portion 262 (see Fig. 16, described later) of the fourth roller support portion 280. The center of the ring portion 243 is at the same position as the center of the rotary shaft of the second roller 232. The ring portion 243 includes a hole at its center. The rotary shaft 141 of the second roller 232 is inserted into the hole. The second arm portion 244 extends horizontally behind the ring portion 243. The first arm portion 242 extends diagonally in front of the ring portion 243 at about 45 degrees.

The right side plate portion 251 has substantially the same shape as the left side plate portion 241. The right side plate portion 251 includes a first arm portion 252, a ring portion 253 and a second arm portion 254. The ring portion 253 is positioned in parallel with the right side of the ring portion 272 (see Fig. 16, described later) of the fourth roller support portion 280. The length of the second arm portion 254 in the back-and-forth direction is slightly longer than the length of the second arm portion 244 in the back-and-forth direction. The ring portion 253 includes a hole at its center. The rotary shaft 141 of the second roller 232 is inserted into the hole. The second arm portion 254 extends horizontally backward from the ring portion 253. The first arm portion 252 extends diagonally in front of the ring portion 253 at about 45 degrees.

The first arm portion 242 and the first arm portion 252 have a hole at their front end portion, respectively. A rotary shaft of the third roller 233 is inserted into these holes. The first arm portion 242 and the first arm portion 252 rotatably support the third roller 233. The bridging portion 246 extends rightward from the end portion of the second arm portion 244 and is connected to the second arm portion 254.

The air cylinder 255 is provided below the bridging portion 246. The air cylinder 255 includes a movable portion 59. The movable portion 59 can abut the bridging portion 246. The air cylinder 255 has the same mechanism and function as the air cylinder 105 according to the first embodiment and thus the detailed description thereof will be omitted.

The stopper 257 is provided below the second arm portion 254. The stopper 257 can abut the rear end portion of the second arm portion 254 and, except for this point, has the same configuration and the same function as the stopper 107 according to the first embodiment and thus the detailed description thereof will be omitted. The spring 256 is provided in front of the stopper 257. The lower end portion of the spring 256 is connected to the support bed 4. The upper end portion of the spring 256 is connected to the right side of the second arm portion 254. The spring 256 pulls the second arm portion 254 downward. The third roller support portion 230 swings about the rotary shaft 141. The first arm portion 242 and the first arm portion 252 move upward due to the biasing of the spring 256. The third roller 233 is raised as the third roller support portion 230 swings. As a result, the third roller 233 moves upward.

As shown in Fig. 14, a mechanism that rotates the second roller 232 is the same as the mechanism that rotates the first pulley 25 in the first embodiment. In other words, the first pulley 25 is replaced by the second roller 232.

The fourth roller support portion 280 will be described. As shown in Fig. 16, the fourth roller support portion 280 includes a left side plate portion 261, a right side plate portion 271, a movement arm portion 274 and a bridging portion 264. The left side plate portion 261 having a plate shape is positioned at the left side of the second roller 232 (see Fig. 15) and the fourth roller 234. The right side plate portion 271 having a plate portion is positioned at the right side of the second roller 232 and the fourth roller 234.

As shown in Fig. 16, the left side plate portion 261 includes a ring portion 262 and a support arm portion 263. The center of the ring portion 262 having a circular shape is at the same position as the center of the rotary shaft of the second roller 232. The rotary shaft 141 (see Fig. 15) of the second roller 232 is inserted into the hole. The support arm portion 263 extends horizontally forward from the ring portion 262.

The right side plate portion 271 has substantially the same shape as the left side plate portion 261. The right side plate portion 271 includes a ring portion 272 and a support arm portion 273. The ring potion 272 includes a hole at its center. The rotary shaft 141 (see Fig. 15) of the second roller 232 is inserted into the hole.

The support arm portion 263 and the support arm portion 273 have a hole at their upper front end portion, respectively. A rotary shaft of the fourth roller 234 is inserted into these holes. The fourth roller 234 is in contact with the second roller 232 (see Fig. 15). Thus, the fourth roller 234 rotates along with the rotation of the second roller 232. The bridging portion 264 extends rightward from the lower end portion of the support arm portion 263 and is connected to the lower end portion of the support arm portion 273.

The movement arm portion 274 extends downward from the ring portion 272. A bar portion 275 extends leftward from the lower end portion of the movement arm portion 274.

As shown in Fig. 17, an air cylinder 291 is provided diagonally in front of and below the lower feeding portion 38. The air cylinder 291 includes an air inlet ports. An intake/exhaust hose (not shown) is connected to each of the air inlet ports. The cloth bonding apparatus 1 controls an intake and an exhaust of a compressed air through the air inlet ports. The position of a piston inside the air cylinder 291 moves in accordance with the intake and exhaust control. The movable portion 292 is connected to the piston. Thus, the movable portion 292 moves in the back-and-forth direction along with the movement of the piston.

An engaging portion 293 is connected to the rear end of the movable portion 292. The engaging portion 293 is substantially rectangular parallelepiped. The engaging portion 293 includes a groove portion extending in the right-and-left direction on its upper surface. The bar portion 275 is positioned within the groove portion. The engaging portion 293 moves along with the movement of the movable portion 292. The bar portion 275 moves in the back-and-forth direction along with the movement of the engaging portion 293. The fourth roller support portion 280 swings about the rotary shaft 141 as the bar portion 275 moves. The fourth roller 234 moves in the vertical direction as the fourth roller support portion 280 swings.

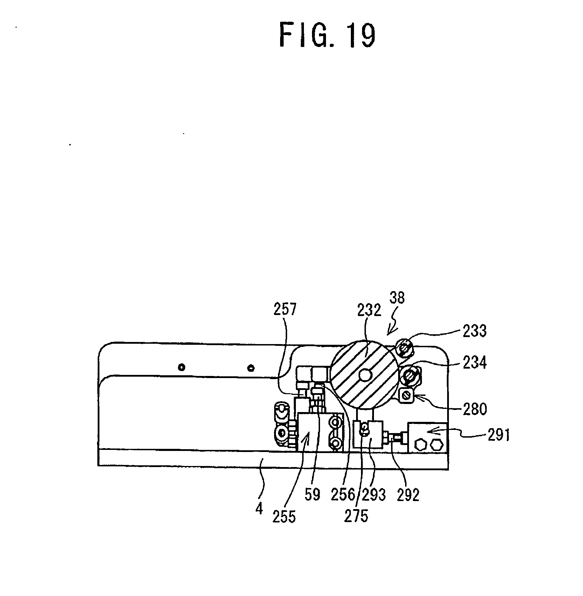

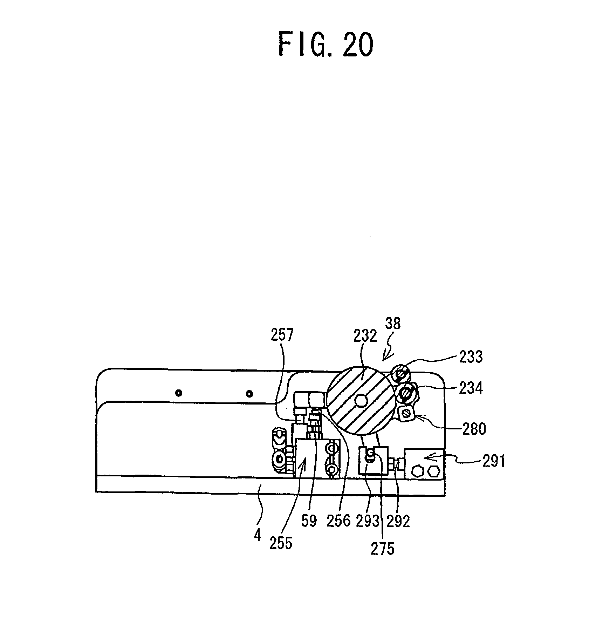

The positional relationship of the rollers 232 to 234 will be described with reference to Figs. 19 and 20. When the engaging portion 293 moves backward, the bar portion 275 moves backward. As shown in Fig. 19, when the bar portion 275 moves backward, the fourth roller support portion 280 swings and the fourth roller 234 moves downward. The third roller 233 and the fourth roller 234 separate from each other. Thus, even when the second roller 232 rotates, the rotation drive force of the second roller 232 is not transmitted to the third roller 233 via the fourth roller 234.

When the engaging portion 293 moves forward, the bar portion 275 moves forward. As shown in Fig. 20, when the bar portion 275 moves forward, the fourth roller support portion 280 swings and the fourth roller 234 swings upward. The third roller 233 and the fourth roller 234 contact each other. Thus, when the second roller 232 rotates, the rotation drive force of the second roller 232 is transmitted to the third roller 233 via the fourth roller 234. Thus, the third roller 233 rotates.

The fourth roller 234 rotates in a direction reverse to the rotation direction of the second roller 232. The third roller 233 rotates in a direction reverse to the rotation direction of the fourth roller 234. Thus, the second roller 232 and the third roller 233 rotate in the same direction. The second roller 232 and the third roller 233 can feed the cloth in the same direction.

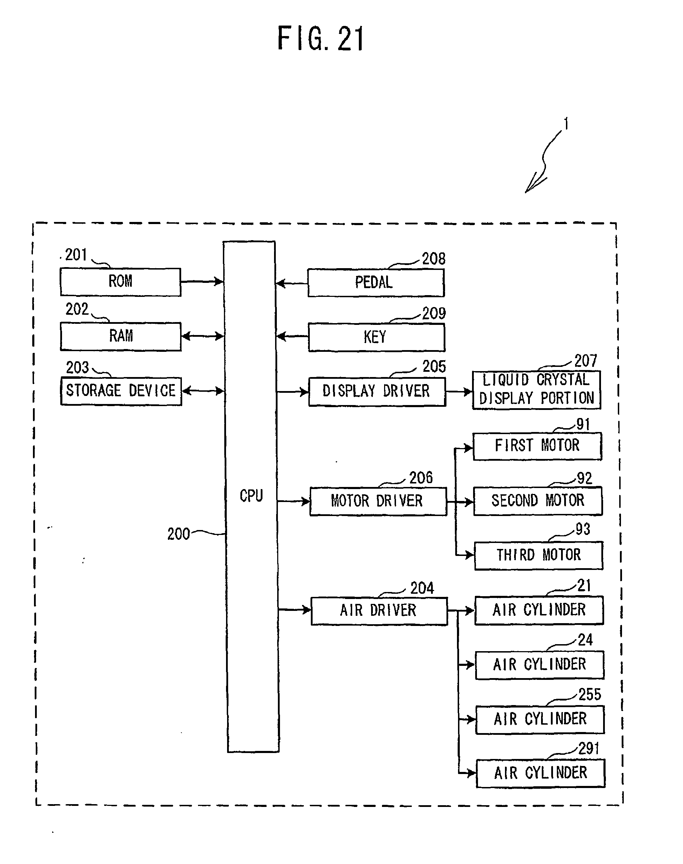

The electrical configuration of the cloth bonding apparatus 1 of the second embodiment will be described with reference to Fig. 21. Same reference numerals are denoted to the same components as to the first embodiment and thus the description thereof will be omitted.

The air driver 204 is electrically connected to the air cylinders 21, 24, 255 and 291. The CPU 200 controls the pressure of the air to be fed into the air inlet ports of the air cylinders 21, 24, 255 and 291 via the air driver 204. The third roller 233 moves in the vertical direction on the basis of the operation of the air cylinder 255. The fourth roller 234 moves in the vertical direction on the basis of the operation of the air cylinder 291.

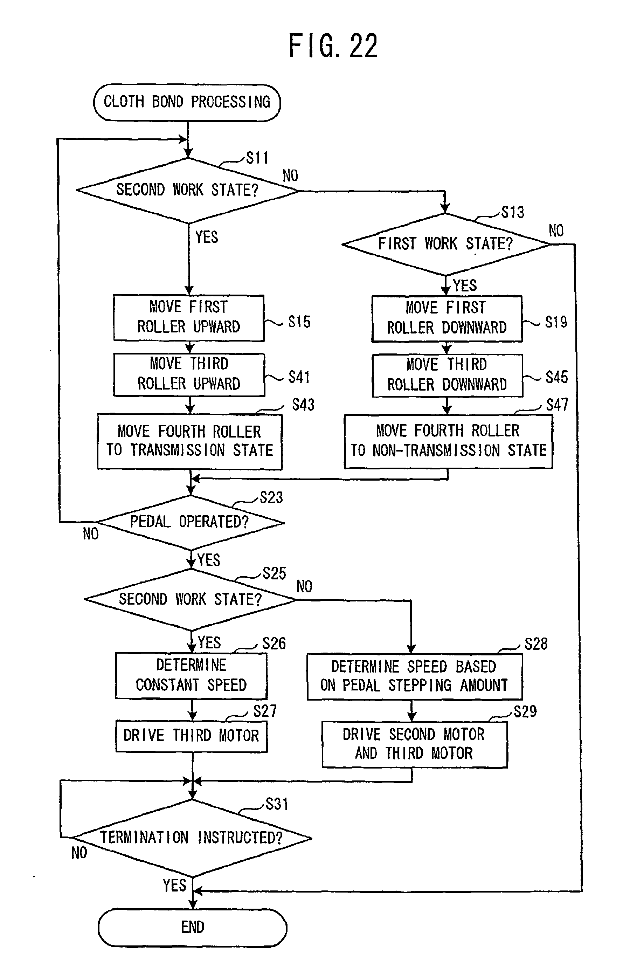

A cloth bond operation will be described with reference to Figs. 22, 23 and 24. In a case where the worker operates the key 209, the CPU 200 performs the cloth bond processing shown in Fig. 22.

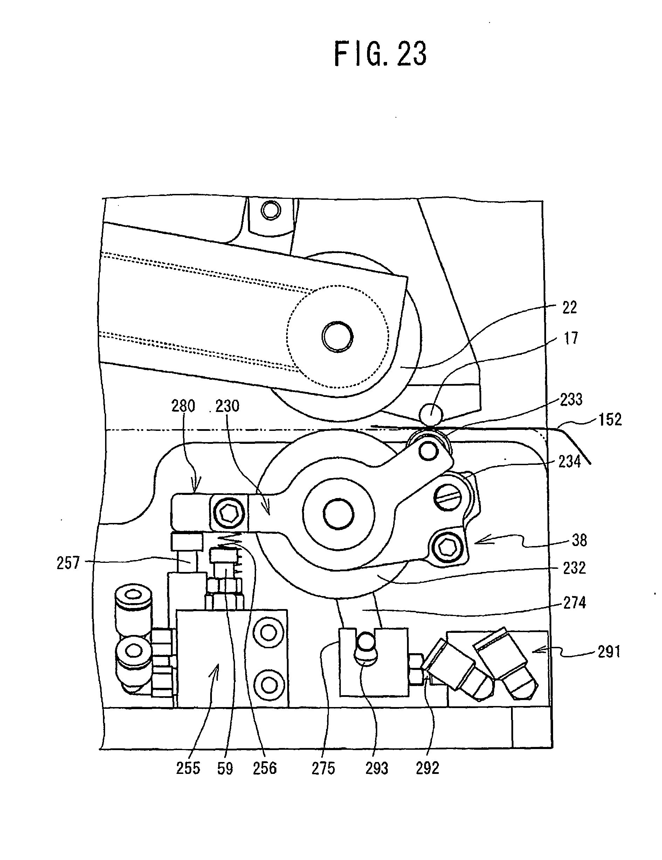

In a case where the worker has operated the key 209 to select the second work state (S11: YES), the CPU 200 moves the movable portion 15 of the air cylinder 21 upward. The first roller 22 moves upward (S 15). As shown in Fig. 23, the gap between the first roller 22 and the second roller 232 becomes larger. The CPU 200 moves the movable portion 59 of the air cylinder 255 downward. The third roller 233 moves upward (S41). As shown in Fig. 23, the third roller 233 slightly projects upward from the hole 29 (see Fig. 13). The gap between the third roller 233 and the nozzle 17 becomes smaller, and the nozzle 17 and the third roller 233 sandwich the lower cloth 152. The CPU 200 moves the movable portion 292 of the air cylinder 291 forward. The fourth roller 234 moves upward. The third roller 233 and the fourth roller 234 abut each other (S43). The CPU 200 then proceeds to the processing of S23.

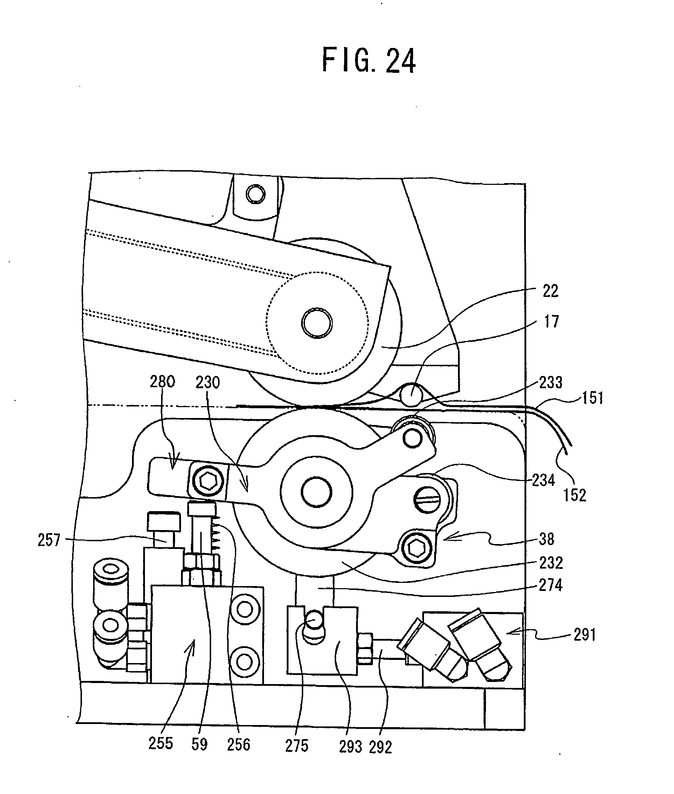

In a case where the worker has selected the first work state (S11: NO, S 13: YES), the CPU 200 moves the movable portion 15 of the air cylinder 21 downward. The first roller 22 moves downward (S19). As shown in Fig. 24, the gap between the first roller 22 and the second roller 232 becomes smaller and the first roller 22 contacts the upper cloth 151. The first roller 22 and the second roller 232 sandwich the upper cloth 151 and the lower cloth 152 in the vertical direction. The CPU 200 moves the movable portion 59 of the air cylinder 255 upward. The third roller 233 moves downward (S45). As shown in Fig. 24, the gap between the third roller 233 and the nozzle 17 becomes larger. The force with which the nozzle 17 and the third roller 233 sandwich the lower cloth 152 becomes smaller. The CPU 200 moves the movable portion 292 of the air cylinder 291 backward. The fourth roller 234 moves downward (S47). As shown in Fig. 24, the third roller 233 and the fourth roller 234 move away from each other. The rotation drive force of the second roller 232 is not transmitted to the fourth roller 234. The third roller 233 can freely rotate. The CPU 200 then proceeds to the processing of S23. In a case where the worker has selected neither the first work state nor the second work state (S13: NO), the CPU 200 terminates the cloth bond processing.

After the aforementioned processing, the CPU 200 determines whether the worker has stepped on and pressed down the pedal 208 (S23). In a case where the worker has not stepped on and pressed down the pedal 208 (S23: NO), the processing returns to step S11. In a case where the worker has stepped on and pressed down the pedal 208 (S23: YES), the CPU 200 determines the work state selected by the worker via the key 209 (S25). In a case where the worker has selected the second work state (S25: YES), the CPU 200 determines the rotation speed of the third motor 93 at a constant rotation speed (S26). The CPU 200 rotates the third motor 93 at the determined rotation speed (S27). The second roller 232 rotates at a constant speed. The third roller 233 and the fourth roller 234 abut each other. The rotation drive force of the second roller 232 is transmitted to the third roller 233 via the fourth roller 234. The third roller 233 rotates at a constant speed. The third roller 233 feeds the lower cloth 152 at the constant speed. The CPU 200 rotates the first motor 91 at a constant speed. The adhesive is discharged from the nozzle 17 by a constant amount. The CPU 200 then proceeds to the processing of S31. The lower cloth 152 moves from front to back. As shown in Fig. 23, the gap between the first roller 22 and the second roller 232 is large. The lower cloth 152 does not contact the first roller 22 even when the lower cloth 152 approaches in the vicinity of the first roller 22. Therefore, the adhesive applied to the lower cloth 152 does not adhere to the first roller 22. Thus, the cloth bonding apparatus 1 can perform the bonding work in the second work state thereby to prevent the adhesive from adhering to and contaminating the first roller 22.

In a case where the worker has selected the first work state (S25: NO), the CPU 200 determines the rotation speed of the second motor 92 and the third motor 93 at speeds proportional to the stepping amount of the pedal 208 (S28). The CPU 200 rotates the second motor 92 and the third motor 93 at the respective determined speeds (S29). The upper cloth 151 and the lower cloth 152 move at the speeds proportional to the stepping amount. The first roller 22 and the second roller 232 press and bond the upper cloth 151 and the lower cloth 152. As shown in Fig. 24, the fourth roller 234 and the third roller 233 are apart from each other. The rotation drive force of the second roller 232 is not transmitted to the third roller 233. The third roller 233 does not rotate. The force with which the nozzle 17 and the third roller 233 sandwich the lower cloth becomes smaller. In a case where the third roller 233 and the nozzle 17 strongly sandwich the lower cloth 152, the first roller 22 and the second roller 232 apply a tensile force to the cloth and thus the bonded cloths may ruck. However, since the cloth can freely move below the nozzle 17 in the cloth bonding apparatus 1, the first roller 22 and the second roller 232 do not apply a tensile force to the cloth. The cloth smoothly moves and the bonded cloths will not ruck. The CPU 200 then proceeds to the processing of S31.

The CPU 200 determines whether the worker has performed an operation for terminating the bonding work (S31). In a case where the worker has not performed the operation for terminating (S31: NO), the CPU 200 returns to the processing of S31. In a case where the worker has performed the operation for terminating (S31: YES), the CPU 200 terminates the cloth bond processing.

As described above, in a case where the worker has selected the first work state, the cloth bonding apparatus 1 makes the gap between the nozzle 17 and the third roller 233 larger than the gap made in the case where the worker has selected the second work state. The force with which the nozzle 17 and the third roller 233 sandwich the cloth becomes smaller. Thus, the cloth bonding apparatus 1 can prevent the bonded cloths from rucking or being distorted.

The fourth roller 234 transmits the rotation drive force of the second roller 232 to the third roller 233. Thus, the third roller 233 can rotate even if the third roller 233 does not include the drive portion. The third roller 233 can feed the cloth.

In a case where the worker has selected the first work state, the third roller 233 and the fourth roller 234 move away from each other. The third roller 233 can be freely rotatable. Thus, the cloth smoothly moves and the bonded cloths will not ruck.

The lower feeding portion 38 corresponds to the "second feeding portion" of the present invention. The movable portion 59 and the CPU 200 that performs the processings of S41 and S45 in Fig. 22 correspond to the "second moving portion" of the present invention. The movable portion 59 corresponds to the "stopper" of the present invention. The CPU 200 that performs the processings of S41 and S45 in Fig. 22 corresponds to the "first control portion" of the present invention. The fourth roller 234 corresponds to the "transmitting portion" of the present invention. The third roller support portion 230 corresponds to the "arm portion" of the present invention, the spring 256 corresponds to the "spring" of the present invention, and the third roller support portion 230 and the spring 256 correspond to the "urging mechanism" of the present invention. The third motor 93 that rotates the second roller 232 corresponds to the "first drive portion" of the present invention. The air cylinder 255 corresponds to the "second air cylinder" of the present invention.

The cloth bonding apparatus 1 adjusts the gap between the third roller 233 and the nozzle 17 by moving the third roller 233 in the vertical direction. The cloth bonding apparatus 1 may adjust the gap between the third roller 233 and the nozzle 17 by moving the movable portion 21 of the air cylinder 24 and thus moving the support portion 16.

The cloth bonding apparatus 1 moves the movable portion 58 of the air cylinder 255 thereby moving the third roller 233 in the vertical direction. The cloth bonding apparatus 1 may use the stopper 257 as follows. The worker selects the second work state. The worker previously adjusts the vertical length of the stopper 257 such that the third roller 233 projects from the hole 29. The third roller 233 can press the cloth to the nozzle 17 with a proper force.

Examples in which the cloth bonding apparatus bonds separate pieces of cloths together are given in the above-described embodiment and the modified embodiment. However, the cloth bonding apparatus may bond folded portions of one folded cloth. In other words, the cloth bonding apparatus may bond two layers of cloth(s).

## Claims

1. A cloth bonding apparatus comprising:
a nozzle (17) through which an adhesive is dischargeable onto a cloth (153);
a first feeding portion (22) that is provided on a downstream side of the nozzle in a feeding direction of the cloth and positioned on a first side relative to the cloth to be fed;
a second feeding portion (37, 38) that is provided opposite to the first feeding portion on a second side, and provided at a nozzle position or at an upstream side of the nozzle position in the feeding direction, the second side being the other side opposite to the first side relative to the cloth, the nozzle position being a position on the second side opposite to the nozzle;
a first moving portion (21) that moves the first feeding portion to a position in contact with the cloth and to a position separated from the cloth; and
a switch portion (200) that switches a work state of bonding the cloth between a first work state and a second work state, and
wherein:
in a case where the switch portion switches the work state to the first work state, the first moving portion moves the first feeding portion to the position in contact with the cloth such that the first feeding portion and the second feeding portion feed the cloth, and
in a case where the switch portion switches the work state to the second work state, the first moving portion moves the first feeding portion to the position separated from the cloth and the second feeding portion feeds the cloth.

2. The cloth bonding apparatus according to claim 1, wherein
the first feeding portion comprises a first roller (22),
in a case where the switch portion switches the work state to the first work state, the first moving portion moves the first roller to the position in contact with the cloth, and
in a case where the switch portion switches the work state to the second work state, the first moving portion moves the first roller to the position separated from the cloth.

3. The cloth bonding apparatus according to claim 2, wherein
the first feeding portion further comprises a roller support portion (20) that rotatably supports the first roller, and
the first moving portion comprises a first air cylinder (21) that is connected to the roller support portion.

4. The cloth bonding apparatus according to claim 2 or 3, wherein
the second feeding portion comprises:
a first pulley (25) that is provided opposite to the first roller;
a second pulley (28) that is provided at the nozzle position or at the upstream side of the nozzle position in the feeding direction;
a belt (27) that is crossed between the first pulley and the second pulley; and
a second moving portion (58, 200) that moves at least one of the nozzle and the belt such that a gap between the nozzle and the belt is larger in a case where the switch portion switches the work state to the first work state than the gap therebetween in a case where the switch portion switches the work state to the second work state.

5. The cloth bonding apparatus according to claim 4, further comprising a first drive portion (93) that drives to rotate at least one of the first pulley and the second pulley thereby to drive the belt,
wherein:
in a case where the switch portion switches the work state to the first work state, the first roller and the belt sandwich and support the cloth, and the first drive portion drives the belt to press and feed the cloth, and
in a case where the switch portion switches the work state to the second work state, the first drive portion drives the belt to feed the cloth.

6. The cloth bonding apparatus according to claim 4 or 5, wherein
the second feeding portion comprises an urging mechanism (100, 106),
the urging mechanism comprising:
an arm portion (100) that rotatably supports the second pulley; and
a spring (106) that is connected to the arm portion and urges the second pulley toward the nozzle, and
the second moving portion further comprises:
a stopper (58) that limits a swinging movement of the arm portion thereby to limit a movement of the second pulley toward the nozzle; and
a first control portion (200) that controls a position of the stopper.

7. The cloth bonding apparatus according to claim 6, further comprising a second air cylinder (105) that moves the position of the stopper,
wherein the first control portion controls the second air cylinder.

8. The cloth bonding apparatus according to claim 2 or 3, wherein
the second feeding portion comprises:
a second roller (232) that is provided opposite to the first roller;
a third roller (233) that is provided at the nozzle position; and
a second moving portion (59, 200) that moves at least one of the nozzle and the third roller such that a gap between the nozzle and the third roller is larger in a case where the switch portion switches the work state to the first work state than the gap therebetween in a case where the switch portion switches the work state to the second work state.

9. The cloth bonding apparatus according to claim 8, further comprising:
a first drive portion (93) that drives to rotate the second roller; and
a transmitting portion (280) that transmits a rotation drive force of the first drive portion to the third roller,
wherein:
in a case where the switch portion switches the work state to the first work state, the first roller and the second roller sandwich and support the cloth, and the first drive portion drives to rotate the second roller to press and feed the cloth, and
in a case where the switch portion switches the work state to the second work state, the transmitting portion drives to rotate the third roller to feed the cloth.

10. The cloth bonding apparatus according to claim 9, wherein
in a case where the switch portion switches the work state to the second work state, the transmitting portion transmits the rotation drive force of the first drive portion to the third roller and
in a case where switch portion switches the work state to the first work state, the transmitting portion does not transmit the rotation drive force of the first drive portion to the third roller.

11. The cloth bonding apparatus according to claim 9 or 10, wherein
the transmitting portion comprises a fourth roller (234) that is arranged in contact with the second roller and the third roller, and
while the fourth roller is in contact with the second roller and the third roller, the first drive portion drives to rotate the second roller, the second roller drives to rotate the fourth roller, and the fourth roller drives to rotate the third roller so that the fourth roller transmits the rotation drive force of the first drive portion to the third roller.

12. The cloth bonding apparatus according to any of claims 8 to 11, wherein
the second feeding portion comprises an urging mechanism (230, 256)
the urging mechanism comprising:
an arm portion (230) that rotatably supports the third roller; and
a spring (256) that is connected to the arm portion, and
the second moving portion further comprises:
a stopper (59) that limits a swinging movement of the arm portion to limit a movement of the third roller toward the nozzle; and
a first control portion (200) that controls a position of the stopper.

13. The cloth bonding apparatus according to claim 12, further comprising a second air cylinder (255) that moves the position of the stopper,
wherein the first control portion controls the second air cylinder.

14. The cloth bonding apparatus according to any of claims 1 to 13, further comprising:
a second drive portion (92, 93) that drives at least one of the first feeding portion and the second feeding portion;
an input portion (208) that inputs a speed;
a speed determining portion (200) that determines a feed speed of the cloth on the basis of the speed input via the input portion; and
a second control portion (200) that controls the second drive portion in order to feed the cloth at the feed speed determined by the speed determining portion,
wherein:
in a case where the switch portion switches the work state to the first work state, the speed determining portion determines the speed input via the input portion as the feed speed , and
in a case where switch portion switches the work state to the second work state, the speed determining portion determines a predetermined speed as the feed speed.

## Patentansprüche

1. Tuchfügegerät mit:
einer Düse (17), durch die ein Klebemittel auf ein Tuch (153) ausgelassen werden kann;
einem ersten Vorschubabschnitt (22), der an einer stromabwärtigen Seite der Düse in einer Vorschubrichtung des Tuchs vorgesehen und an einer ersten Seite bezüglich des vorzuschiebenden Tuchs positioniert ist;
einem zweiten Vorschubabschnitt (37, 38), der gegenüber dem ersten Vorschubabschnitt an einer zweiten Seite vorgesehen ist, und der an einer Düsenposition oder an einer stromaufwärtigen Seite der Düsenposition in der Vorschubrichtung vorgesehen ist, wobei die zweite Seite die andere Seite gegenüber der ersten Seite bezüglich des Tuchs ist, wobei die Düsenposition eine Position an der zweiten Seite gegenüber der Düse ist;
einem ersten Bewegungsabschnitt (21), der den ersten Vorschubabschnitt zu einer Position, die mit dem Tuch in Kontakt ist, und zu einer Position bewegt, die von dem Tuch getrennt ist; und
einem Schaltabschnitt (200), der einen Arbeitszustand zum Fügen des Tuchs zwischen einem ersten Arbeitszustand und einem zweiten Arbeitszustand schaltet, und wobei:
falls der Schaltabschnitt den Arbeitszustand zu dem ersten Arbeitszustand schaltet, bewegt der erste Bewegungsabschnitt den ersten Vorschubabschnitt zu der Position, die mit dem Tuch in Kontakt ist, und zwar derart, dass der erste Vorschubabschnitt und der zweite Vorschubabschnitt das Tuch vorschieben, und
falls der Schaltabschnitt den Arbeitszustand zu dem zweiten Arbeitszustand schaltet, bewegt der erste Bewegungsabschnitt den ersten Vorschubabschnitt zu der Position, die von dem Tuch getrennt ist, und der zweite Vorschubabschnitt schiebt das Tuch vor.

2. Tuchfügegerät gemäß Anspruch 1, wobei
der erste Vorschubabschnitt eine erste Walze (22) aufweist,
falls der Schaltabschnitt den Arbeitszustand zu dem ersten Arbeitszustand schaltet, bewegt der erste Bewegungsabschnitt die erste Walze zu der Position, die mit dem Tuch in Kontakt ist, und
falls der Schaltabschnitt den Arbeitszustand zu dem zweiten Arbeitszustand schaltet, bewegt der erste Bewegungsabschnitt die erste Walze zu der Position, die von dem Tuch getrennt ist.

3. Tuchfügegerät gemäß Anspruch 2, wobei
der erste Vorschubabschnitt des Weiteren einen Walzenstützabschnitt (20) aufweist, der die erste Walze drehbar stützt, und
der erste Bewegungsabschnitt einen ersten Luftzylinder (21) aufweist, der mit dem Walzenstützabschnitt verbunden ist.

4. Tuchfügegerät gemäß Anspruch 2 oder 3, wobei
der zweite Vorschubabschnitt Folgendes aufweist:
eine erste Riemenscheibe (25), die gegenüber der ersten Walze vorgesehen ist;
eine zweite Riemenscheibe (28), die an der Düsenposition oder an der stromaufwärtigen Seite der Düsenposition in der Vorschubrichtung vorgesehen ist;
einen Riemen (27), der zwischen der ersten Riemenscheibe und der zweiten Riemenscheibe gezogen ist; und
einen zweiten Bewegungsabschnitt (58, 200), der zumindest die Düse oder den Riemen so bewegt, dass ein Spalt zwischen der Düse und dem Riemen in einem Fall, bei dem der Schaltabschnitt den Arbeitszustand zu dem ersten Arbeitszustand schaltet, größer ist als der Spalt dazwischen in einem Fall, bei dem der Schaltabschnitt den Arbeitszustand zu dem zweiten Arbeitszustand schaltet.

5. Tuchfügegerät gemäß Anspruch 4, des Weiteren mit einem ersten Antriebsabschnitt (93), der zumindest die erste Riemenscheibe oder die zweite Riemenscheibe drehend antreibt, um dadurch den Riemen anzutreiben, wobei:
falls der Schaltabschnitt den Arbeitszustand zu dem ersten Arbeitszustand schaltet, ist das Tuch durch die erste Walze und den Riemen eingefasst und gestützt, und der erste Antriebsabschnitt treibt den Riemen zum Pressen und Vorschieben des Tuchs an, und
falls der Schaltabschnitt den Arbeitszustand zu dem zweiten Arbeitszustand schaltet, treibt der erste Antriebsabschnitt den Riemen zum Vorschieben des Tuchs an.

6. Tuchfügegerät gemäß Anspruch 4 oder 5, wobei
der zweite Vorschubabschnitt einen Drückmechanismus (100, 106) aufweist,
wobei der Drückmechanismus Folgendes aufweist:
einen Armabschnitt (100), der die zweite Riemenscheibe drehbar stützt; und
eine Feder (106), die mit dem Armabschnitt verbunden ist und die zweite Riemenscheibe zu der Düse drückt, und
wobei der zweite Bewegungsabschnitt des Weiteren Folgendes aufweist:
einen Stopper (58), der eine Schwenkbewegung des Armabschnitts begrenzt, um dadurch eine Bewegung der zweiten Riemenscheibe zu der Düse zu begrenzen; und
einen ersten Steuerabschnitt (200), der eine Position des Stoppers steuert.

7. Tuchfügegerät gemäß Anspruch 6, des Weiteren mit einem zweiten Luftzylinder (105), der die Position des Stoppers bewegt,
wobei der erste Steuerabschnitt den zweiten Luftzylinder steuert.

8. Tuchfügegerät gemäß Anspruch 2 oder 3, wobei
der zweite Vorschubabschnitt Folgendes aufweist:
eine zweite Walze (232), die gegenüber der ersten Walze vorgesehen ist;
eine dritte Walze (233), die an der Düsenposition vorgesehen ist; und
einen zweiten Bewegungsabschnitt (59, 200), der zumindest die Düse oder die dritte Walze derart bewegt, dass ein Spalt zwischen der Düse und der dritten Walze in einem Fall, bei dem der Schaltabschnitt den Arbeitszustand zu dem ersten Arbeitszustand schaltet, größer ist als der Spalt dazwischen in einem Fall, bei dem der Schaltabschnitt den Arbeitszustand zu dem zweiten Arbeitszustand schaltet.

9. Tuchfügegerät gemäß Anspruch 8, des Weiteren mit:
einem ersten Antriebsabschnitt (93), der die zweite Walze drehend antreibt; und
einen Übertragungsabschnitt (280), der eine Drehantriebskraft des ersten Antriebsabschnitts zu der dritten Walze überträgt, wobei:
falls der Schaltabschnitt den Arbeitszustand zu dem ersten Arbeitszustand schaltet, wird das Tuch durch die erste Walze und die zweite Walze eingefasst und gestützt, und der erste Antriebsabschnitt treibt die zweite Walze drehend an, um das Tuch zu pressen und vorzuschieben, und
falls der Schaltabschnitt den Arbeitszustand zu dem zweiten Arbeitszustand schaltet, treibt der Übertragungsabschnitt die dritte Walze drehend an, um das Tuch vorzuschieben.

10. Tuchfügegerät gemäß Anspruch 9, wobei
falls der Schaltabschnitt den Arbeitszustand zu dem zweiten Arbeitszustand schaltet, überträgt der Übertragungsabschnitt die Drehantriebskraft des ersten Antriebsabschnitts zu der dritten Walze, und
falls der Schaltabschnitt den Arbeitszustand zu dem ersten Arbeitszustand schaltet, überträgt der Übertragungsabschnitt die Drehantriebskraft des ersten Antriebsabschnitts nicht zu der dritten Walze.

11. Tuchfügegerät gemäß Anspruch 9 oder 10, wobei
der Übertragungsabschnitt eine vierte Walze (234) aufweist, die in einem Kontakt mit der zweiten Walze und der dritten Walze angeordnet ist, und
während die vierte Walze mit der zweiten Walze und der dritten Walze in Kontakt ist, treibt der erste Antriebsabschnitt die zweite Walze drehend an, die zweite Walze treibt die vierte Walze drehend an und die vierte Walze treibt die dritte Walze drehend an, so dass die vierte Walze die Drehantriebskraft von dem ersten Antriebsabschnitt zu der dritten Walze überträgt.

12. Tuchfügegerät gemäß einem der Ansprüche 8 bis 11, wobei der zweite Vorschubabschnitt einen Drückmechanismus (230, 256) aufweist, wobei der Drückmechanismus Folgendes aufweist:
einen Armabschnitt (230), der die dritte Walze drehbar stützt; und
eine Feder (256), die mit dem Armabschnitt verbunden ist, und
wobei der zweite Bewegungsabschnitt des Weiteren Folgendes aufweist:
einen Stopper (59), der eine Schwenkbewegung des Armabschnitts begrenzt, um eine Bewegung der dritten Walze zu der Düse zu begrenzen; und
einen ersten Steuerabschnitt (200), der eine Position des Stoppers steuert.

13. Tuchfügegerät gemäß Anspruch 12, des Weiteren mit einem zweiten Luftzylinder (255), der die Position des Stoppers bewegt,
wobei der erste Steuerabschnitt den zweiten Luftzylinder steuert.

14. Tuchfügegerät gemäß einem der Ansprüche 1 bis 13, des Weiteren mit:
einem zweiten Antriebsabschnitt (92, 93), der zumindest den ersten Vorschubabschnitt oder den zweiten Vorschubabschnitt antreibt;
einem Eingabeabschnitt (208), der eine Geschwindigkeit eingibt;
einem Geschwindigkeitsbestimmungsabschnitt (200), der eine Vorschubgeschwindigkeit des Tuchs auf der Grundlage der Geschwindigkeit bestimmt, die über den Eingabeabschnitt eingegeben ist; und
einem zweiten Steuerabschnitt (200), der den zweiten Antriebsabschnitt steuert, um das Tuch mit der Vorschubgeschwindigkeit vorzuschieben, die durch den Geschwindigkeitsbestimmungsabschnitt bestimmt ist, wobei:
falls der Schaltabschnitt den Arbeitszustand zu dem ersten Arbeitszustand schaltet, bestimmt der Geschwindigkeitsbestimmungsabschnitt die Geschwindigkeit, die über den Eingabeabschnitt eingegeben ist, als die Vorschubgeschwindigkeit, und
falls der Schaltabschnitt den Arbeitszustand zu dem zweiten Arbeitszustand schaltet, bestimmt der Geschwindigkeitsbestimmungsabschnitt eine vorbestimmte Geschwindigkeit als die Vorschubgeschwindigkeit.

## Revendications

1. Dispositif de soudage de tissu (1), comprenant :
un injecteur (17) par l'intermédiaire duquel un adhésif peut être distribué sur un tissu (153) ;
une première partie d'introduction (22) qui est agencée d'un côté aval de l'injecteur suivant une direction d'introduction du tissu et positionnée sur un premier côté par rapport au tissu à délivrer ;
une seconde partie d'introduction (37, 38) qui est agencée à l'opposé de la première partie d'introduction sur un second côté, et agencée à un emplacement d'injecteur ou d'un côté amont de l'emplacement d'injecteur suivant la direction d'introduction, le second côté étant l'autre côté opposé au premier côté par rapport au tissu, l'emplacement d'injecteur étant un emplacement sur le second côté opposé à l'injecteur ;
une première partie de déplacement (21) qui déplace la première partie d'introduction vers un emplacement en contact avec le tissu et vers un emplacement séparé du tissu ; et
une partie de commutation (200) qui commute un état opérationnel de l'opération de soudage du tissu entre un premier état opérationnel et un second état opérationnel, et
dans lequel :
dans un cas dans lequel la partie de commutation commute l'état opérationnel vers le premier état opérationnel, la première partie de déplacement déplace la première partie d'introduction vers l'emplacement en contact avec le tissu de telle sorte que la première partie d'introduction et la seconde partie d'introduction délivrent le tissu, et
dans un cas dans lequel la partie de commutation commute l'état opérationnel vers le second l'état opérationnel, la première partie de déplacement déplace la première partie d'introduction vers l'emplacement séparé du tissu et la seconde partie d'introduction délivre le tissu.

2. Dispositif de soudage de tissu selon la revendication 1, dans lequel
la première partie d'introduction comprend un premier rouleau (22),
dans un cas dans lequel la partie de commutation commute l'état opérationnel vers le premier état opérationnel, la première partie de déplacement déplace le premier rouleau vers la position en contact avec le tissu, et
dans un cas dans lequel la partie de commutation commute l'état opérationnel vers le second état opérationnel, la première partie de déplacement déplace le premier rouleau vers la position séparée du tissu.

3. Dispositif de soudage de tissu selon la revendication 2, dans lequel
la première partie d'introduction comprend en outre une partie de support de rouleau (20) qui supporte avec possibilité de rotation le premier rouleau, et
la première partie de déplacement comprend un premier vérin pneumatique (21) qui est relié à la partie de support de rouleau.

4. Dispositif de soudage de tissu selon la revendication 2 ou 3, dans lequel
la seconde partie d'introduction comprend :
une première poulie (25) qui est agencée à l'opposé du premier rouleau ;
une seconde poulie (28) qui est agencée au niveau de l'emplacement d'injecteur ou du côté amont de l'emplacement d'injecteur suivant la direction d'introduction ;
une courroie (27) qui est croisée entre la première poulie et la seconde poulie ; et
une seconde partie de déplacement (58, 200) qui déplace au moins l'un de l'injecteur et de la courroie de telle sorte qu'un jeu entre l'injecteur et la courroie est supérieur, dans un cas dans lequel la partie de commutation commute l'état opérationnel vers le premier état opérationnel, au jeu entre ces derniers dans un cas dans lequel la partie de commutation commute l'état opérationnel vers le second état opérationnel.

5. Dispositif de soudage de tissu selon la revendication 4, comprenant en outre une première partie d'entraînement (93) qui entraîne en rotation au moins l'une de la première poulie et de la seconde poulie afin d'entraîner ainsi la courroie,
dans lequel :
dans un cas dans lequel la partie de commutation commute l'état opérationnel vers le premier état opérationnel, le premier rouleau et la courroie intercalent entre eux et supportent le tissu, et la première partie d'entraînement entraîne la courroie afin de presser et de délivrer le tissu, et
dans un cas dans lequel la partie de commutation commute l'état opérationnel vers le second état opérationnel, la première partie d'entraînement entraîne la courroie afin de délivrer le tissu.

6. Dispositif de soudage de tissu selon la revendication 4 ou 5, dans lequel
la seconde partie d'introduction comprend un mécanisme d'application (100, 106), le mécanisme d'application comprenant :
une partie de bras (100) qui supporte avec possibilité de rotation la seconde poulie ;et
un ressort (106) qui est relié à la partie de bras et applique la seconde poulie vers l'injecteur, et
la seconde partie de déplacement comprend en outre :
un élément d'arrêt (58) qui limite un mouvement oscillant de la partie de bras, limitant ainsi un mouvement de la seconde poulie vers l'injecteur ; et
une première partie de commande (200) qui commande une position de l'élément d'arrêt.

7. Dispositif de soudage de tissu selon la revendication 6, comprenant en outre un second vérin pneumatique (105) qui déplace la position de l'élément d'arrêt,
dans lequel la première partie de commande assure la commande du second vérin pneumatique.

8. Dispositif de soudage de tissu selon la revendication 2 ou 3, dans lequel la seconde partie d'introduction comprend :
un deuxième rouleau (232) qui est agencé à l'opposé du premier rouleau ;
un troisième rouleau (233) qui est agencé à l'emplacement d'injecteur ; et
une seconde partie déplacement (59, 200) qui déplace au moins l'un de l'injecteur et du troisième rouleau de telle sorte qu'un jeu entre l'injecteur et le troisième rouleau est supérieur, dans un cas dans lequel la partie de commutation commute l'état opérationnel vers le premier état opérationnel, au jeu entre ces derniers dans un cas dans lequel la partie de commutation commute l'état opérationnel vers le second état opérationnel.

9. Dispositif de soudage de tissu selon la revendication 8, comprenant en outre :
une première partie d'entraînement (93) qui entraîne en rotation le deuxième rouleau ; et
une partie de transmission (280) qui transmet un effort d'entraînement en rotation de la première partie d'entraînement vers le troisième rouleau,
dans lequel :
dans un cas dans lequel la partie de commutation commute l'état opérationnel vers le premier état opérationnel, le premier rouleau et le deuxième rouleau intercalent entre eux et supportent le tissu, et la première partie d'entraînement entraîne en rotation le deuxième rouleau afin de presser et de délivrer le tissu, et
dans un cas dans lequel la partie de commutation commute l'état opérationnel vers le second état opérationnel, la partie de transmission entraîne en rotation le troisième rouleau afin de délivrer le tissu.

10. Dispositif de soudage de tissu selon la revendication 9, dans lequel
dans un cas dans lequel la partie de commutation commute l'état opérationnel vers le second état opérationnel, la partie de transmission transmet l'effort d'entraînement en rotation de la première partie d'entraînement vers le troisième rouleau, et
dans un cas dans lequel la partie de commutation commute l'état opérationnel vers le premier état opérationnel, la partie de transmission ne transmet pas l'effort d'entraînement en rotation de la première partie d'entraînement vers le troisième rouleau.

11. Dispositif de soudage de tissu selon la revendication 9 ou 10, dans lequel
la partie de transmission comprend un quatrième rouleau (234) qui est agencé en contact avec le deuxième rouleau et le troisième rouleau, et
alors que le quatrième rouleau est en contact avec le deuxième rouleau et le troisième rouleau, la première partie d'entraînement entraîne en rotation le deuxième rouleau, le deuxième rouleau entraîne en rotation le quatrième rouleau, et le quatrième rouleau entraîne en rotation le troisième rouleau, de telle sorte que le quatrième rouleau transmet l'effort d'entraînement en rotation de la première partie d'entraînement vers le troisième rouleau.

12. Dispositif de soudage de tissu selon l'une quelconque des revendications 8 à 11, dans lequel
la seconde partie d'introduction comprend un mécanisme d'application (230, 256), le mécanisme d'application comprenant :
une partie de bras (230) qui supporte avec possibilité de rotation le troisième rouleau ; et
un ressort (256) qui est relié à la partie de bras, et la seconde partie de déplacement comprend en outre :
un élément d'arrêt (59) qui limite un mouvement oscillant de la partie de bras afin de limiter un mouvement du troisième rouleau vers l'injecteur ; et
une première partie de commande (200) qui commande une position de l'élément d'arrêt.

13. Dispositif de soudage de tissu selon la revendication 12, comprenant en outre un second vérin pneumatique (255) qui déplace la position de l'élément d'arrêt,
dans lequel la première partie de commande commande le second vérin pneumatique.

14. Dispositif de soudage de tissu selon l'une quelconque des revendications 1 à 13, comprenant en outre :
une seconde partie d'entraînement (92, 93) qui commande au moins l'une de la première partie d'introduction et de la seconde partie d'introduction ;
une partie d'entrée (208) qui assure l'entrée d'une vitesse ;
une partie de détermination de vitesse (200) qui détermine une vitesse d'introduction du tissu sur la base de la vitesse entrée par l'intermédiaire de la partie d'entrée ; et
une seconde partie de commande (200) qui commande la seconde partie d'entraînement dans le but de délivrer le tissu à la vitesse d'introduction déterminée par la partie de détermination de vitesse,
dans lequel :
dans un cas dans lequel la partie de commutation commute l'état opérationnel vers le premier état opérationnel, la partie de détermination de vitesse détermine la vitesse entrée par l'intermédiaire de la partie d'entrée comme la vitesse d'introduction ; et
dans un cas dans lequel la partie de commutation commute l'état opérationnel vers le second état opérationnel, la partie de détermination de vitesse détermine une vitesse prédéterminée comme la vitesse d'introduction.
